# EUROPEAN PATENT SPECIFICATION

(11) **EP 0 505 972 B1**
(45) Date of publication and mention of the grant of the patent: **11.06.1997**
(21) Application number: 92105027.4
(22) Date of filing: 24.03.1992
(51) Int. Cl.: C08F 212/04, C08F 4/60, C08F 4/602, C08F 297/06

(54) **Process for producing styrenic copolymer**
Verfahren zur Herstellung eines Styrolpolymerisats
Procédé de préparation d'un copolymère styrénique

(30) Priority: 27.03.1991 JP 85739/91; 27.03.1991 JP 85740/91; 28.03.1991 JP 87300/91
(43) Date of publication of application: 30.09.1992
(73) Proprietor: IDEMITSU KOSAN COMPANY LIMITED, Tokyo 100 (JP)
(72) Inventor: Tazaki, Toshinori, Sodegaura-shi, Chiba-ken (JP); Machida, Shuji, Sodegaura-shi, Chiba-ken (JP); Watanabe, Masami, Sodegaura-shi, Chiba-ken (JP); Tomotsu, Norio, Ichihara-shi, Chiba-ken (JP); Kuramoto, Masahiko, Ichihara-shi, Chiba-ken (JP)
(74) Representative: Türk, Gille, Hrabal, Leifert

(56) References cited:
- EP-A- 0 210 615
- EP-A- 0 277 003
- EP-A- 0 277 004
- EP-A- 0 389 981
- EP-A- 0 421 659
- EP-A- 0 505 890
- US-A- 4 215 029
- US-A- 4 603 186
- H.-G. ELIAS, "Makromoleküle", vol. 1, Hüthig & Wepf Verlag, 1990P. p. 420
- H.-G. ELIAS, "Makromoleküle", vol. 2, Hüthig & Wepf-Verlag, 1992; p. 48

## Description

### BACKGROUND OF THE INVENTION

### 1. Field of the Invention

The present invention relates to a process for producing a styrenic copolymer. More particularly, it pertains to a process for efficiently producing a styrenic copolymer comprising a styrenic monomer and a monomer selected from indenic monomer, acenaphthylenic monomer and a vinylic monomer containing a polar group by the use of a specific high activity catalyst.

### 2. Description of the Related Arts

Heretofore, styrenic polymers produced by the radical polymerization method have an atactic configuration in stereostructure and can be molded to various shapes by various molding methods, such as injection molding, extrusion molding, blow molding, vacuum molding and cast molding, and they have been widely used as domestic electrical appliances, office machines, household goods, packaging containers, toys, furnitures, synthetic papers and other industrial materials.

However, such styrenic polymers having atactic configuration have some inferior properties in their heat resistance and chemical resistance.

The group of the present inventors have previously succeeded in developing styrenic polymers enhanced in crystallinity of the syndiotactic polystyrene and excellent in moldability, and a process for producing styrenic polymers improved in heat distortion temperature of syndiotactic polystyrene under a high load and excellent in the compatibility and favorably adhesive wettability with other types of resins or inorganic fillers.

Because of a markedly high crystallization rate, however, the styrenic polymers having syndiotactic configuration have sometimes met a difficulty in quenching in the case of a thick original sheet during the production of an oriented film. Moreover in the case where the styrenic polymers having syndiotactic configuration are melt molded in a variety of ways, they frequently encountered a difficulty in molding on account of little difference between the melting point and the decomposition temperature, that is, the difficulty of its narrow temperature region of melt moldability.

In addition, styrene homopolymers with syndiotactic configuration have the same molecular skeleton as that of the corresponding atactic styrene homopolymer, and therefore, are subject to deterioration due to ultraviolet ray.

Furthermore, in the production of a styrenic polymer or copolymer having a high degree of syndiotactic configuration usually by the use of a catalyst comprising a transition metal compound and an aluminoxane, a large amount of the aluminoxane using expensive trimethylaluminum as the starting raw material is required as compared with that of the transition metal compound, resulting in an extremely high catalyst cost with a considerable amount of catalyst residue in the polymers.

### SUMMARY OF THE INVENTION

It is an object of the present invention to provide a process for effectively producing a styrenic copolymer excellent in physical properties by the use of the catalyst without the use of expensive aluminoxane required in a large quantity.

Other objects of the present invention will be obvious from the text of the specification hereinafter disclosed.

As the result of intensive research and investigation made by the present inventors for the purpose of achieving the above-mentioned object, it has been found that the use of a specific coordination complex compound comprising a cation and an anion in which a plurality of radicals are bonded to a metal as the catalyst in place of the aforestated aluminoxane can attain the foregoing object. The present invention has been accomplished on the basis of the above-described findings.

Specifically, the present invention provides a process for producing a styrenic copolymer which comprises copolymerizing (a) a styrenic monomer and (b) a monomer selected from indenic monomer, acenaphthylenic monomer and a vinylic monomer containing a polar group in the presence of a catalyst comprising as primary ingredients (A) a transition metal compound and (B) a coordination complex compound comprising a cation and an anion in which a plurality of radicals are bonded to a metal, and at the same time, a process for producing a styrenic copolymer which comprises copolymerizing (a) a styrenic monomer and (b) a monomer selected from indenic monomer, acenaphthylenic monomer and a vinylic monomer containing a polar group in the presence of a catalyst comprising as primary ingredients (A) a transition metal compound, (B) a coordination complex compound comprising a cation and an anion in which a plurality of radicals are bonded to a metal and (C) an organoaluminum compound.

### DESCRIPTION OF THE PREFERRED EMBODIMENTS

As described hereinbefore, in the process according to the present invention (a) styrenic monomer and (b) a monomer selected from indenic monomer, acenaphthylenic monomer and a vinylic monomer containing a polar group are copolymerized. As the component (a) of the starting comonomers there is exemplified a styrenic monomer represented by the general formula (I) 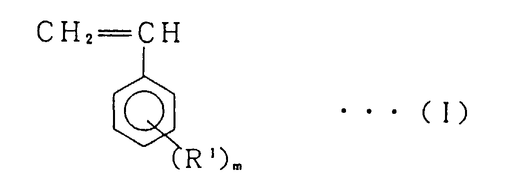 wherein R¹ is a hydrogen atom, a halogen atom such as chlorine, bromine, fluorine and iodine, a hydrocarbon radical including saturated hydrocarbon radical, especially alkyl having 20 or less, preferably 1 to 10 carbon atoms such as methyl, ethyl, propyl, butyl, pentyl and hexyl, or unsaturated hydrocarbon radical such as vinyl; m is an integer from 1 to 3 and when m is 2 or 3, each R¹ may be the same or different.

Specific examples of the styrenic monomer represented by the general formula (I) include styrene; alkyl styrenes such as p-methylstyrene, m-methylstyrene, o-methylstyrene, 2,4-dimethylstyrene, 2,5-dimethylstyrene, 3,4-dimethylstyrene, 3,5-dimethylstyrene, p-ethylstyrene, m-ethylstyrene, p-tert-butylstyrene, p-divinyl-benzene and m-divinylbenzene; halogenated styrenes such as p-chlorostyrene, m-chlorostyrene, o-chlorostyrene, p-bromostyrene, m-bromostyrene, o-bromostyrene, 2,9,6-tribromostyrene, p-fluorostyrene, m-fluorostyrene and o-fluorostyrene; and the like.

As the vinylic monomer containing a polar group of the component (b) of the starting comonomers, there are available a variety of such monomers exemplified by acrylonitrile compound, unsaturated carboxylic acid compound, nitrogen-containing vinyl compound and heteroatomic unsaturated hydrocarbon.

As the acrylonitrile monomer, there is exemplified a compound represented by the general formula (II) 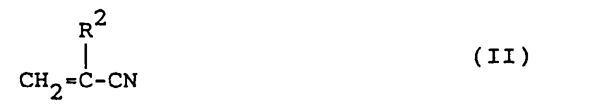 wherein R² is a hydrogen atom or methyl, specific examples of the acrylonitrile monomer represented by the general formula (II) include acrylonitrile and methacrylonitrile.

As the unsaturated carboxylic acid monomer, there is exemplified a compound represented by the general formula (III) 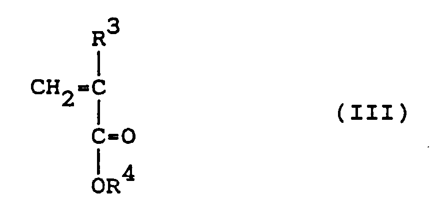 wherein R³ is a hydrogen atom or saturated hydrocarbon radical having 5 or less carbon atoms; and R⁴ is a hydrogen atom, saturated hydrocarbon radical having 20 or less carbon atoms, saturated hydrocarbon radical having at least one hydroxyl group and 20 or less carbon atoms, benzyl, substituted benzyl, phenyl or substituted phenyl radicals.

Specific example of the unsaturated carboxylic acid monomer represented by the general formula (III) include acrylic acid; alkyl acrylates such as methyl acrylate; ethyl acrylate; n-butyl acrylate; isobutyl acrylate; sec-butyl acrylate; tert-butyl acrylate; 2-ethylhexyl acrylate; and octyl acrylate; hydroxyl group-containing alkyl acrylates such as 2-hydroxyethyl acrylate; phenyl acrylate; benzyl acrylate; methacrylic acid and methacrylic ester corresponding to above-mentioned acrylic ester.

As the nitrogen-containing vinyl monomer, there is exemplified a compound represented by the general formula (IV) 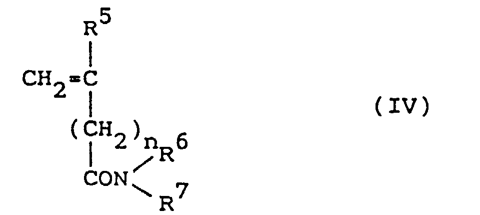 wherein R⁵ is a hydrogen atom, halogen atom or hydrocarbon radical having 1 to 20 carbon atoms; R⁶ and R⁷ are each a carbon atom, nitrogen atom, sulfur atom, silicon atom, an oxygen atom, a substituent having at least one hydrogen atom and metallic ion or an elemental atom, and may be the same or different; and n is an integer from 0 to 20.

Examples of the nitrogen-containing vinyl monomer represented by the general formula (IV) include acrylamide, N-monoalkyl derivative thereof, N,N-dialkyl derivative thereof, N-hydroxyalkyl derivative thereof, N-haloalkyl derivative thereof, N-cyanoalkyl derivative thereof, formalin adduct, bisacrylamide derivative, bismethacrylamide derivative, N-aminoalkyl derivative thereof, N-sulfonalkyl derivative thereof, oxyalkyl derivative thereof, amino acid derivative, ester derivative thereof, hydrazine derivative, azo derivative, diamine derivative, diamide derivative, heterocyclic derivative and quinone derivative.

Specific examples thereof include acrylamide; methacrylamide; N-methylacrylamide; N-ethylacrylamide; N-isopropylacrylamide; N-n-butylacrylamide; N-sec-butylacrylamide; N-isobutylacrylamide; N-tert-butylacrylamide; N-(1,1-dimethylpropyl)acrylamide; N-cyclohexylacrylamide; N-(1,1-dimethylbutyl)acrylamide; N-(1-ethyl-1-methylpropyl)acrylamide; N-(1,1,2-trimethylpropyl)acrylamide; N-n-heptylacrylamide; N-(1,1-dimethylpentyl)acrylamide; N-(1-ethyl-1-methylbutyl)acrylamide; N-(1-ethyl-1,2-dimethylpropyl)acrylamide; diethylpropyl)acrylamide; N-(1,1diethylpropyl)acrylamide; N-n-octylacrylamide; N-(1,1,3,3-tetramethylbutyl)acrylamide; dimethylbutyl)-acrylamide; N-(1-ethyl-1,3-dimethylbutyl)-acrylamide; N-(1,1-diethylbutyl)acrylamide; N-(1-ethyl-1-methylpentyl)acrylamide; N-(1-propyl-1,3-dimethylbutyl)acrylamide; dimethylbutyl)acrylamide; N-(1,butyl-1,3-dimethylbutyl)acrylamide; N-dodecylacrylamide; N-(1-methylundecyl)acrylamide; N-(1,1-dibutylpentyl)acrylamide; N-(1-methyltridecyl)acrylamide; dibutylpentyl)acrylamide; N-(1-methylheptadecyl)acrylamide; N-(1-adamantyl)acrylamide; N-(7,7-dimethylbicyclo[3,2,0]hepto-6-nyl)acrylamide; N-allylacrylamide; N-(1,1-dimethylpropyl)acrylamide; N-benzylacrylamide; N-phenylacrylamide; N-(2-methylphenyl)acrylamide; N-(4-methylphenyl)acrylamide; N-(1-naphthyl)acrylamide; N-(2-naphthyl)acrylamide; N-methylmethacrylamide; N-ethylmethacrylamide; N-n-butylmethacrylamide; N-tert-butylmethacrylamide; N-n-octylmethacrylamide; N-n-dodecylmethacrylamide; N-cyclohexylmethacrylamide; N-(7,7-dimethylbicyclo[3,2,0] hepto-6-nyl)methacrylamide; N-allylmethacrylamide; N-(1,1-dimethylpropenyl)methacrylamide; N-benzylmethacrylamide; N[1-(4-chlorophenyl)] ethylmethacrylamide; N-phenylmethacrylamide; N-(2-methylphenyl)methacrylamide; N-(3-methylphenyl)methacrylamide; N-(4-methylphenyl)methacrylamide; N-(2,3-dimethylphenyl)methacrylamide; N-(2-phenylphenyl)methacrylamide; N-(2-hydroxyphenyl)methacrylamide; N-(2-methoxyphenyl)methacrylamide; N-(4-methoxyphenyl)methacrylamide; N-(3-ethoxyphenyl)methacrylamide; N-(4-ethoxyphenyl)methacrylamide; N-(2-chlorophenyl)methacrylamide; N-(3-chlorophenyl)methacrylamide; N-(4-chlorophenyl)methacrylamide; N-(4-bormophenyl)methacrylamide; N-(2,5-dichlorophenyl)methacrylamide; N-(2,3,6-trichlorophenyl)methacrylamide; N-(4-nitrophenyl)methacrylamide; N,N-dimethylacrylamide; N,N-diethylacrylamide; N,N-dibutylacrylamide; N,N-diisobutylacrylamide; N,N-dicyclohexylacrylamide; N,N-bis(4-methylpentyl)acrylamide; N,N-diphenylacrylamide; N,N-bis(5-methylhexyl)acrylamide; N,N-dibenzylacrylamide; N,N-bis(2-ethylhexyl)acrylamide; N-methyl-N-phenylacrylamide; N-acryloylpyrrolidine; N-acryloylpiperidine; N-acryloylmorpholine; N-acryloylthiamorpholine; N,N-dimethylmethacrylamide; N,N-diethylmethacrylamide; N,N-diphenylmethacrylamide; N-methyl-N-phenylmethacrylamide; N-methacryloylpiperidine; N-(2-hydroxyethyl)acrylamide; N-(2-hydroxypropyl)acrylamide; N -(1,1-dimethyl-2-hydroxyethyl)acrylamide; N-(1-ethyl-2-hydroxyethyl)acrylamide; N-(1,1-dimethyl-3-hydroxybutyl)acrylamide; N-(2-chloroethyl)acrylamide; N-(1-methyl-2-chloroethyl)acrylamide; N-(2,2,2-trichloro-1-hydroxyethyl)acrylamide; N-(2,2,2-trichloro-1-methoxyethyl)acrylamide; N-(1,2,2,2-tetrachloroethyl)acrylamide; N-(2,2,3-trichloro-2-hydroxypropyl)acrylamide; N-(2-chlorocyclohexyl)acrylamide; N-(2,2-difluoroethyl)acrylamide; N-(2,2,2-trifluoroethyl)acrylamide; N-(3,3,3-trifluoropropyl)acrylamide; N-(3,3-difluorobutyl)acrylamide; N,N-bis(2,2,2-trifluoroethyl)acrylamide; ethyl-2-acrylamideacetate; acryloyldicyandiamide; methacryloyldicyandiamide; N-(1-naphthyl)methacrylamide; N-(2-naphtyl)methacrylamide; N-formylacrylamide; N-acetylacrylamide; N-(2-oxopropyl)acrylamide; N-(1-methyl-2-oxopropyl)acrylamide; N-(1-isobutyl-2-oxopropyl)acrylamide; N-(1-benzyl-2-oxopropyl)acrylamide; N-(1,1-dimethyl-3-oxobutyl)acrylamide; N,N-bis-(2-cyanoethyl)acrylamide; N-(4-cyano-2,2,6,6-tetramethyl-4-piperidyl)acrylamide; N-(2-cyanoethyl)methacrylamide; N-(1,1-dimethyl-2-cyanoethyl)acrylamide; N-(hydroxymethyl)acrylamide; N-(methoxymethyl)acrylamide; N-(ethoxymethyl)acrylamide; N-(n-propoxymethyl)acrylamide; N-(isopropoxymethyl)acrylamide; N-(n-butoxymethyl)acrylamide; N,N'-methylenebisacrylamide; 1,2-bisacrylamideethane; 1,3-bisacrylamidepropane; 1,4-bisacrylamidebutane; 1,5-bisacrylamidepentane; 1,6-bisacrylamidehexane; 1,7-bisacrylamideheptane; 1,8-bisacrylamideoctane; 1,9-bisacrylamidenonane; 1,10-bisacrylamidedecane; 1,12-bisacrylamidedodecane; 1,1,1-trimethylamine-2-(N-phenyl-N-acryloyl)propaneimide; 1,1-dimethyl-1-(2-hydroxy)propylamide-N-phenyl-N-methacryloylglycineimide; N-(2-diethylaminoethyl)acrylamide; N-(2-morpholinoethyl)acrylamide; N-(2-morpholinoethyl)acrylamide; N-(3-dimethylaminopropyl)acrylamide; N-(3-propylaminopropyl)acrylamide; N-[3-bis(2-hydroxyethyl)aminopropyl]acrylamide; N-(1,1-dimethyl-2-dimethylaminoethyl)acrylamide; N-(2,2-dimethyl-3-dimethylaminopropyl)acrylamide; N-(2,2-dimethyl-3-dibuthylaminopropyl)acrylamide; N-(1,1-dimethyl-3-dimethylaminopropyl)acrylamide; N-acryloylglycineamide; N-(2,4-dinitrophenylhydrazono)methyleneacrylamide; 2-acrylamidepropanesulfonic acid; 2-acrylamide-n-butanesulfonic acid; 2-acrylamide-n-hexanesulfonic acid; 2-acrylamide-n-octanesulfonic acid; 2-acrylamide-n-dodecanesulfonic acid; 2-acrylamide-n-tetradecanesulfonic acid; 2-acrylamide-2-methylpropanesulfonic acid; 2-acrylamide-2-phenylpropanesulfonic acid; 2-acrylamide-2,4,4-trimethylpentanesulfonic acid; 2-acrylamide-2-methylphenylethanesulfonic acid; 2-acrylamide-2-(chlorophenyl)propanesulfonic acid; 2-acrylamide-2-carboxymethylpropanesulfonic acid; 2-acrylamide-2-(pyridyl)propanesulfonic acid; 2-acrylamide-1-methylpropanesulfonic acid; 3-acrylamide-3-methylbutanesulfonic acid; 2-methacrylamide-n-decanesulfonic acid; 2-methacrylamide-n-tetradecanesulfonic acid; sodium 4-methacrylamidebenzenesulfonate and a combination of two or more of these compounds.

As the heteroatomic unsaturated hydrocarbon monomer, there is exemplified a compound represented by the general formula (V) 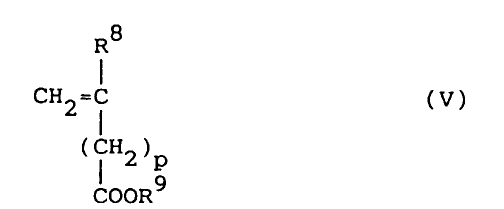 wherein R⁸ is a hydrogen atom, halogen atom, cyano group or hydrocarbon radical having 1 to 20 carbon atoms; n is an integer from 0 to 20; R⁹ is 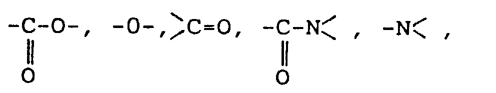 -SO₃-, 〉Si〈 , a substituent having at least one metallic atom or a hydrogen atom; p is an integer from 1 to 20 when R⁹ is a hydrogen atom.

Specific examples of the heteroatomic unsaturated hydrocarbon monomer represented by the general formula (V) include tetrahydrofurfurylmethacrylate; 2-phenylmethylacrylate; glycidylacrylate; glycidylmethacrylate; tetrahydrofurfurylacrylate; (3-ethyl-3-oxetanyl)methylacrylate; tetrahydro-2H-pyranylacrylate; (tetrahydro-2-furanyl)methylacrylate; 9-oxiranylnonylacrylate; 3-(methyloxiranyl)methylacrylate; N-phenyl-N-ethylaminoethylmethacrylate; p-nitrophenylmethacrylate; diethylaminoethylacrylate; diethylaminoethylmethacrylate; and quaternary salts of these compounds; 2-cyanoethylacrylate; 2-(butylethylamino)ethylacrylate; morpholinoethylmethacrylate; 2-morpholinoethylacrylate; sodium salt of 4-sulfophenylacrylate; sodium acrylate; potassium acrylate; magnesium acrylate; calcium acrylate; sodium salt of 10-undecenoic acid; 10-undecenoic acid; 4-sulfophenylacrylate; β-ethoxyethylacrylate; phenoxyethylacrylate; phenoxydiethylethylacrylate; 2-benzooxyethylacrylate; methacrylomethoxytrimellitic acid; 3-trimethoxysilylpropylacrylate; and 3-trimethoxysilylpropylmetacrylate.

Of the components (b), the monomer containing a polar group includes maleic acid, maleic anhydride, fumaric acid, maleimide, maleimide anhydride, itaconic acid, itaconic anhydride and derivatives thereof.

Specific examples of the derivative of maleic acid, fumaric acid and maleic anhydride include esterification products of maleic acid and fumaric acid and substituted compounds of maleic acid, fumaric acid and maleic anhydride, exemplified by diethylfumarate, diphenylfumarate, fumaronitrile, methylfumaric acid, diethyl methylfumarate, methylmaleic anhydride, dimethylmaleic anhydride, phenylmaleic anhydride, diphenylmaleic anhydride, chloromaleic anhydride, dichloromaleic anhydride, fluoromaleic anhydride, difluoromaleic anhydride, bromomaleic anhydride, dibromomaleic anhydride, methylmaleic acid, dimethylmaleic acid, phenylmaleic acid, chloromaleic acid, dichloromaleic acid, fluoromaleic acid, difluoromaleic acid, bromomaleic acid, dimethyl maleate, diehtylmaleate, diethyl methylmaleate, dipropyl maleate, diisopropyl maleate, dibutyl maleate, diisobutyl maleate, dipentyl maleate, diisopentyl maleate, dihexyl maleate, diheptyl maleate, dioctyl maleate, bis(2-ethylhexyl)maleate, dinonyl maleate, dihexadecyl maleate, dipropargyl maleate, bis[2-(2-chloroethoxy)ethyl]maleate, dibenzyl mateate, methylallyl maleate, methyl-2-butenyl maleate, methyl-3-butenyl maleate, allyl-3-methylthiopropyl maleate, allyl-3-ethylthiopropylmaleate, allyl-3-acetylthiopropyl maleate, allyl-3-phenylthiopropyl maleate, methyl-p-chlorophenyl maleate, butyl-p-chlorophenyl maleate, benzyl-p-chlorophenyl maleate, diphenyl maleate, di-m-cresyl maleate, di-p-cresyl maleate, n-heptyl-maleate, nonyl maleate, decyl maleate, dodecyl maleate, octadecyl maleate, fluoroalkyl maleate.

Further, the derivatives of maleimide and maleimide anhydride include those represented by N-methylmaleimide, N-ethylmaleimide, N-butylmaleimide, N-tertiary-butylmaleimide, N-phenylmaleimide and N-(α-naphthyl)maleimide.

Specific examples of the derivatives of itaconic acid and itaconic anhydride include diethyl itaconate, di-n-octyl itaconate, cis-glutaconic acid, diethyl cis-glutaconate, trans-glutaconic acid and diethyl trans-glutaconate.

Furthermore, the components (b) include indenic or acenaphthylenic monomers.

Specific examples of the indenic monomer include indene; alkyl-substituted indenes such as; 1-methylindene; 2-methylindene; 3-methylindene; 4-methylindene; 5-methylindene; 6-methylindene; 7-methylindene; 1,4-dimethylindene; 1,5-dimethylindene; 1,6-dimethylindene; 1,7-dimethylindene; 4-ethylindene; 5-ethylindene; 6-ethylindene; and 7-ethylindene; halogen-substituted indenes such as 4-chloroindene; 5-chloroindene; 6-chloroindene; 7-chloroindene; 4-bromoindene; 5-bromoindene; 6-bromoindene; 7-bromoindene; 4-iodoindene; 5-iodoindene; 6-iodoindene; 7-iodoindene; 4-fluoroindene; 5-fluoroindene; 6-fluoroindene; and 7-fluoroindene; aryl-substituted indenes such as 4-phenylindene; 5-phenylindene; 6-phenylindene; and 7-phenylindene; alkoxy-substituted indenes such as 4-methoxyindene; 5-methoxyindene; 6-methoxyindene; and 7-methoxyindene; alkoxycarbonyl-substituted indenes such as 4-methoxycarbonylindene; 5-methoxycarbonylindene; 6-methoxycarbonylindene; and 7-methoxycarbonylindene; acyloxy indenes such as 4-methylcarbonyloxyindene; 5-methylcarbonyloxyindene; 6-methylcarbonyloxyindene; and 7-methylcarbonyloxyindene; alkylsilyl-substituted indenes such as 4-trimethylsilylindene; 5-trimethylsilylindene; 6-trimethylsilylindene; and 7-trimethylsilylindene; alkylstannyl-substituted indenes such as 4-tri-n-butylstannylindene; 5-tri-n-butylstannylindene; 6-tri-n-butylstannylindene; and 7-tri-n-butylstannylindene.

Specific examples of the acenaphthylenic monomer include acenaphthylene; alkyl-substituted acenaphthylenes such as 1-methylacenaphthylene; 4-methylacenaphthylene; 5-methylacenaphthylene; 6-methylacenaphthylene; 1,4-dimethylacenaphthylene; 1,5-dimethylacenaphthylene; 1,6-dimethylacenaphthylene; 1,8-dimethylacenaphthylene; 1,9-dimethylacenaphthylene; 1,10-dimethylacenaphthylene; 4-ethylacenaphthylene; 5-ethylacenaphthylene; 6-ethylacenaphthylene; 4-n-propylacenaphthylene; 5-n-propylacenaphthylene; and 6-n-propylacenaphthylene; halogen-substituted acenaphthylenes such as 4-chloroacenaphthylene; 5-chloroacenaphthylene; 6-chloroacenaphthylene; 4-bromoacenaphthylene; 5-bromoacenaphthylene; 6-bromoacenaphthylene; 4-iodoacenaphthylene; 5-iodoacenaphthylene; 6-iodoacenaphthylene; 4-fluoroacenaphthylene; 5-fluoroacenaphthylene; 6-fluoroacenaphthylene; 4,5-dichloroacenaphthylene; 4,6-dichloroacenaphthylene; 4,8-dichloroacenaphthylene; 4,9-dichloroacenaphthylene; 4,10-dichloroacenaphthylene; 5,6-dichloroacenaphthylene; 5,8-dichloroacenaphthylene; 5,9-dichloroacenaphthylene; 6,8-dichloroacenaphthylene; 4,5-dibromoacenaphthylene; 4,6-dibromoacenaphthylene; 4,8-dibromoacenaphthylene; 4,9-dibromoacenaphthylene; 4,10-dibromoacenaphthylene; 5,6-dibromoacenaphthylene; 5,8-dibromoacenaphthylene; 5,9-dibromoacenaphthylene; and 6,8-dibromoacenaphthylene; aryl-substituted acenaphthylenes such as 4-phenylacenaphthylene; 5-phenylacenaphthylene; and 6-phenylacenaphthylene; alkoxy-substituted acenaphthylenes such as 4-methoxyacenaphthylene; 5-methoxyacenaphthylene; and 6-methoxyacenaphthylene; alkoxycarbonyl-substituted acenaphthylenes such as 4-methoxycarbonylacenaphthylene; 5-methoxycarbonylacenaphthylene; and 6-methoxycarbonylacenaphthylene; acyloxy-substituted acenaphthylenes such as 4-methylcarbonyloxyacenaphthylene; 5-methylcarbonyloxyacenaphthylene; and 6-methylcarbonyloxyacenaphthylene; alkylsilyl-substituted acenaphthylenes such as 4-trimethylsilylacenaphthylene; 5-trimethylsilylacenaphthylene; and 6-trimethylsilylacenaphthylene; alkylstannyl-substituted acenaphthylenes such as 4-tri-n-butylstannylacenaphthylene; 5-tri-n-butylstannylacenaphthylene; and 6-tri-n-butylstannylacenaphthylene.

In the process according to the present invention, the above-mentioned monomers of the components (a) and (b) are copolymerized in the presence of the catalyst comprising as the primary ingredients (A) a transition metal compound and the aforestated (B) a coordination complex compound.

As the transition metal compound, that is, the component (A) of the catalyst, there are available a variety of compounds, which are exemplified by the compounds of Groups 3 to 6 metals of the Periodic Table and lanthanoid compounds. Of these are preferable the compounds of Group 4 metals (titanium, zirconium, hafnium) and vanadium. Various titanium compounds can be used and a preferred example is at least one compound selected from the group consisting of titanium compounds and titanium chelate compounds represented by the general formula:

TiR¹⁰ ₐR¹¹ _{b}R¹² _{c}R¹³ _{4-(a+b+c)} (VI)

or

TiR¹⁰ _{d}R¹¹ ₑR¹² _{3-(d+e)} (VII)

wherein R¹⁰, R¹¹, R¹² and R¹³ are each a hydrogen atom, an alkyl group having 1 to 20 carbon atoms, an alkoxy group having 1 to 20 carbon atoms, an aryl group having 6 to 20 carbon atoms, an alkylaryl group, an arylalkyl group, an acyloxy group having 1 to 20 carbon atoms, a cyclopentadienyl group, a substituted cyclopentadienyl group, an indenyl group or a halogen atom; a, b and c are each an integer of 0 to 4; and d and e are each an integer of 0 to 3.

R¹⁰, R¹¹, R¹² and R¹³ in the formulae (VI) and (VII) each represent a hydrogen atom, an alkyl group having 1 to 20 carbon atoms (specifically, methyl group, ethyl group, propyl group, butyl group, amyl group, isoamyl group, isobutyl group, octyl group and 2-ethylhexyl group), an alkoxy group having 1 to 20 carbon atoms (specifically, methoxy group, ethoxy group, propoxy group, butoxy group, amyloxy group, hexyloxy group, and 2-ethylhexyloxy group), an aryl group having 6 to 20 carbon atoms, an alkylaryl group, an arylalkyl group (specifically, phenyl group, tolyl group, xylyl group and benzyl group), an acyloxy group having 1 to 20 carbon atoms (specifically, heptadecylcarbonyloxy group), a cyclopentadienyl group, a substituted cyclopentadienyl group (specifically, methylcyclopentadienyl group, 1,3-dimethylcyclopentadienyl group and pentamethylcyclopentadienyl group), an indenyl group or a halogen atom (specifically, chlorine, bromine, iodine and fluorine). There R¹⁰, R¹¹, R¹² and R¹³ may be the same as or different from each other. Furthermore, a, b and c are each an integer of 0 to 4, and d and e are each an integer of 0 to 3.

Other preferred titanium compounds include a titanium compound represented by the formula:

TiRXYZ (VIII)

wherein R represents a cyclopentadienyl group, a substituted cyclopentadienyl group or an indenyl group; X, Y and Z are each independently a hydrogen atom, an alkyl group having 1 to 12 carbon atoms, an alkoxy group having 1 to 12 carbon atoms, an aryl group having 6 to 20 carbon atoms, an aryloxy group having 6 to 20 carbon atoms, an arylalkyl group having 6 to 20 carbon atoms or a halogen atom.

The substituted cyclopentadienyl group represented by R in the above formula is, for example, a cyclopentadienyl group substituted by at least one alkyl group having 1 to 6 carbon atoms, more specifically, methylcyclopentadienyl group, 1,3-dimethylcyclopentadienyl group, 1,2,4-trimethylcyclopentadienyl group and pentamethylcyclopentadienyl group. In addition, X, Y and Z are each independently a hydrogen atom, an alkyl group having 1 to 12 carbon atoms (specifically, methyl group, ethyl group, propyl group, n-butyl group, isobutyl group, amyl group, isoamyl group, octyl group and 2-ethylhexyl group), an alkoxy group having 1 to 12 carbon atoms (specifically, methoxy group, ethoxy group, propoxy group, butoxy group, amyloxy group, hexyloxy group, octyloxy group and 2-ethylhexyl group), an aryl group having 6 to 20 carbon atoms (specifically, phenyl group and naphthyl group), an aryloxy group having 6 to 20 carbon atoms (specifically, phenoxy group), an arylalkyl group having 6 to 20 carbon atoms (specifically, benzyl group) or a halogen atom (specifically, chlorine, bromine, iodine and fluorine).

Specific examples of the titanium compound represented by the formula (VIII) include
cyclopentadienyltrimethyltitanium, cyclopentadienyltriethyltitanium, cyclopentadienyltripropyltitanium, cyclopentadienyltributyltitanium, methylcyclopentadienyltrimethyltitanium, 1,3-dimethylcyclopentadienyltrimethyltitanium, pentamethylcyclopentadienyltrimethyltitanium, pentamethylcyclopentadienyltriethyltitanium, pentamethylcyclopentadienyltripropyltitanium, pentamethylcyclopentadienyltributyltitanium, cyclopentadienylmethyltitanium dichloride, cyclopentadienylethyltitanium dichloride, pentamethylcyclopentadienylmethyltitanium dichloride, pentamethylcyclopentadienylethyltitanium dichloride, cyclopentadienyldimethyltitanium monochloride, cyclopentadienyldiethyltitanium monochloride, cyclopentadienyltitanium trimethoxide, cyclopentadienyltitanium triethoxide, cyclopentadienyltitanium tripropoxide, cyclopentadienyltitanium triphenoxide, pentamethylcyclopentadienyltitanium trimethoxide, pentamethylcyclopentadienyltitanium triethoxide, pentamethylcyclopentadienyltitanium tripropoxide, pentamethylcyclopentadienyltitanium tributoxide, pentamethylcyclopentadienyltitanium triphenoxide, cyclopentadienyltitanium trichloride, pentamethylcyclopentadienyltitanium trichloride, cyclopentadienylmethoxyltitanium dichloride, cyclopentadienyldimethoxytitanium chloride, pentamethylcyclopentadienylmethoxytitanium dichloride, pentamethylcyclopentadienyltribenzyltitanium, cyclopentadienyltribenzyltitanium, pentamethylcyclopentadienylmethyldiethoxytitanium, indenyltitanium trichloride, indenyltitanium trimethoxide, indenyltitanium triethoxide, indenyltrimethyltitanium and indenyltribenzyltitanium.

Of these titanium compounds, a compound not containing halogen atom is preferred and a titanium compound having one π electron type ligand as mentioned above is particularly preferred.

Furthermore, a condensed titanium compound represented by the following formula may be used as the titanium compound. 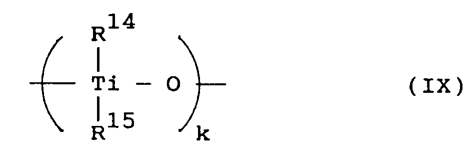 wherein R¹⁴ and R¹⁵ each represent a halogen atom, an alkoxy group having 1 to 20 carbon atoms or an acyloxy group; and m is an integer of 2 to 20.

Furthermore, the above titanium compounds may be used in the form of a complex formed with an ester, an ether, or a phosphine.

The trivalent titanium compound represented by the formula (VII) typically includes a trihalogenated titanium such as titanium trichloride; and a cyclopentadienyltitanium compound such as cyclopentadienyltitanium dichloride, and also those obtained by reducing a tetravalent titanium compound. These trivalent titanium compounds may be used in the form of a complex formed with an ester, an ether, or a phosphine.

In addition, the zirconium compound used as the transition metal compound includes tetrabenzylzirconium, zirconium tetraethoxide, zirconium tetrabutoxide, bisindenylzirconium dichloride, triisopropoxyzirconium chloride, zirconium benzyl dichloride and tributoxyzirconium chloride, hafnium compound includes tetrabenzyl hafnium, hafnium tetraethoxide and hafnium tetrabutoxide, and vanadium vanadium compound includes vanadyl bisacetylacetonato, vanadyl triacetylacetonato, vanadyl triethyoxide and vanadyl tripropoxide. Of these transition metal compounds, the titanium compounds are particularly desirable.

As the transition metal compound which constitutes the component (A) of the catalyst, there is used a transition metal compound with two ligands having conjugated π electrons, for example, at least one compound selected from the group consisting of the transition metal compound represented by the general formula:

M¹R¹⁶R¹⁷R¹⁸R¹⁹ (X)

wherein M¹ is titanium, zirconium or hafnium; R¹⁶ and R¹⁷ are each a cyclopentadienyl group, substituted cyclopentadienyl group, indenyl group or fluorenyl group; and R¹⁸ and R¹⁹ are each a hydrogen atom, halogen, hydrocarbon radical having 1 to 20 carbon atoms, alkoxy group having 1 to 20 carbon atoms, amino group or thioalkoxy group having 1 to 20 carbon atoms, but R¹⁶ and R¹⁷ may be each cross-linked by a hydrocarbon radical having 1 to 5 carbon atoms, alkylsilyl group having 1 to 20 carbon atoms and 1 to 5 silicon atoms or germanium-containing hydrocarbon group having 1 to 20 carbon atoms and 1 to 5 germanium atoms.

In more detail, each of R¹⁶ and R¹⁷ in the general formula (X) designates a cyclopentadienyl group, substituted cyclopentadienyl group, more specifically,
methylcyclopentadienyl group;
1,3-dimethylcyclopentadienyl group;
1,2,4-trimethylcyclopentadienyl group;
1,2,3,4-tetramethylcyclopentadienyl group;
pentamethylcyclopentadienyl group;
trimethylsilylcyclopentadienyl group;
1,3-di(trimethylsilyl)cyclopentadienyl group; 1,2,4-tri(trimethylsilyl)cyclopentadienyl group; tert-butylcyclopentadienyl group;
1,3-di(tert-butyl)cyclopentadienyl group; or
1,2,4-tri(tert-butyl)cyclopentadienyl group, indenyl group, substituted indenyl group, more specifically,
methylindenyl group; dimethylindenyl group; trimethylindenyl group, fluorenyl group, or substituted fluorenyl group such as methylfluorenyl group, and may be the same or different and cross-linked by an alkylidene group having 1 to 5 carbon atoms, more specifically, methylidene group; ethylidene group; propylidene group; or dimethylcarbyl group, or an alkylsilyl group having 1 to 20 carbon atoms and 1 to 5 silicon atoms, more specifically, dimethylsilyl group; diethylsilyl group; dibenzylsilyl group. Each of R¹⁸ and R¹⁹ independently indicates, as described above but more specifically, a hydrogen atom; an alkyl group having 1 to 20 carbon atoms such as methyl group, ethyl group propyl group, n-butyl group, isobutyl group, amyl group, isoamyl group, octyl group or 2-ethylhexyl group; an aryl group having 6 to 20 carbon atoms such as phenyl group or naphthyl group; an arylalkyl group having 7 to 20 carbon atoms such as benzyl group; an alkoxyl group having 1 to 20 carbon atoms such as methoxyl group, ethoxyl group, propoxyl group, butoxyl group, amyloxy group, hexyloxy group, octyloxy group or 2-ethylhexyloxy group; an aryloxy group having 6 to 20 carbon atoms such as phenoxy group; an amino group; or a thioalkoxyl group having 1 to 20 carbon atoms.

Specific examples of the transition-metal compounds represented by the general formula (X) include bis(cyclopentadienyl)dimethyltitanium; bis(cyclopentadienyl) diethyltitanium; bis(cyclopentadienyl)dipropyltitanium; bis(cyclopentadienyl)dibutyltitanium: bis(methylcyclopentadienyl)dimethyltitanium; bis(tert-butylcyclopentadienyl)dimethyltitanium; bis(1,3-dimethylcyclopentadienyl)dimethyltitanium; bis(1,3-di-tert-butylcyclopentadienyl)dimethyltitanium; bis(1,2,4-trimethylcyclopentadienyl)dimethyltitanium; bis(1,2,3,4-tetramethylcyclopentadienyl)dimethyltitanium; bis(pentamethylcyclopentadienyl)dimethyltitanium; bis(trimethylsilylcyclopentadienyl)dimethyltitanium; bis(1,3-di(trimethylsilyl)cyclopentadienyl)dimethyltitanium; bis(1,2,4-tri(trimethylsilyl)cyclopentadienyl)dimethyltitanium; bis(indenyl)dimethyltitanium; bis(fluorenyl)dimethyltitanium; methylenebis(cyclopentadienyl)dimethyltitanium; ethylidenebis(cyclopentadienyl)dimethyltitanium; methylenebis(2,3,4,5-tetramethylcyclopentadienyl)dimethyltitanium; ethylidenebis(2,3,4,5-tetramethylcyclopentadienyl)dimethyltitanium; dimethylsilylbis(2,3,4,5-tetramethylcyclopentadienyl)dimethyltitanium; methylenebisindenyldimethyltitanium; ethylidenebisindenyldimethyltitanium; dimethylsilylbisindenyldimethyltitanium; methylenebisfluorenyldimethyltitanium; ethylidenbisfluorenyldimethyltitanium; dimethylsilylbisfluorenyldimethyltitanium; methylene(tert-butylcyclopentadienyl)(cyclopentadienyl)dimethyltitanium; methylene(cyclopentadienyl)(indenyl)dimethyltitanium; ethylidene(cyclopentadienyl)(indenyl)dimethyltitanium; dimethylsilyl (cyclopentadienyl)(indenyl)dimethyltitanium; methylene(cyclopentadienyl)(fluorenyl)dimethyltitanium; ethylidene(cyclopentadienyl)(fluorenyl)dimethyltitanium; dimethylsilyl (cyclopentadienyl)(fluorenyl)dimethyltitanium; methylene(indenyl)(fluorenyl)dimethyltitanium; ethylidene(indenyl)(fluorenyl)dimethyltitanium; dimethylsilyl(indenyl)(fluorenyl)dimethyltitanium; bis(cyclopentadienyl)dibenzyltitanium; methylcyclopentadienyl)dibenzyltitanium; bis(methylcyclopentadienyl)dibenzyltitanium; bis(1,3-dimethylcyclopentadienyl)dibenzyltitanium; bis(1,2,4-trimethylcyclopentadienyl)dibenzyltitanium; bis(1,2,3,4-tetramethylcyclopentadienyl)dibenzyltitanium; bis(pentamethylcyclopentadienyl)dibenzyltitanium; bis(trimethylsilylcyclopentadienyl)dibenzyltitanium; bis[1,2,4-tri(trimethylsilyl)cyclopentadienyl] bis[1,3-di-(trimethylsilyl)cyclopentadienyl]dibenzyltitanium; dibenzyltitanium; bis(indenyl)dibenzyltitanium; bis(fluorenyl)dibenzyltitanium; methylenebis(cyclopentadienyl)dibenzyltitanium; ethylidenebis(cyclopentadienyl)dibenzyltitanium; methylenebis(2,3,4,5-tetramethylcyclopentadienyl)dibenzyltitanium; ethylidenebis(2,3,4,5-tetramethylcyclopentadienyl) dibenzyltitanium; dimethylsilylbis(2,3,4,5-tetra-methylcyclopentadienyl)dibenzyltitanium; methylcyclopentadienyl)dibenzyltitanium; methylenebis(indenyl)dibenzyltitanium; dimethylsilylbis(indenyl)dibenzyltitanium; methylenebis(fluorenyl)dibenzyltitanium; ethylidenebis(fluorenyl)dibenzyltitanium; dimethylsilylbis(fluorenyl)dibenzyltitanium; methylene(cyclopentadienyl)(indenyl)benzyltitanium; ethylidene(cyclopentadienyl)(indenyl)benzyltitanium; dimethylsilyl(cyclopentadienyl)(indenyl)dibenzyltitanium; methylene(cyclopentadienyl)(fluorenyl)dibenzyltitanium; ethylidene(cyclopentadienyl)(fluorenyl)dibenzyltitanium; dimethylsilyl(cyclopentadienyl)(fluorenyl)dibenzyltitanium; methylene(indenyl)(fluorenyl)dibenzyltitanium; ethylidene(indenyl)(fluorenyl)dibenzyltitanium; dimethylsilyl(indenyl)(fluorenyl)dibenzyltitanium; biscyclopentadienyltitanium dimethoxide; biscyclopentadienyltitanium diethoxide; biscyclopentadienyltitanium dipropoxide; biscyclopentadienyltitanium dibutoxide; biscyclopentadienyltitanium dipheoxide; bis(methylcyclopentadienyl)titanium dimethoxide; bis(1,3-dimethylcyclopentadienyl)titanium dimethylcyclopentadienyl)titanium dimethoxide; dimethoxide; bis(1,2,3,4-tetramethylcyclopentadienyl)titanium dimethoxide; bispentamethylcyclopentadienyltitanium dimethoxide; bis(trimethylsilylcyclopentadienyl)titanium dimethoxide; bis[1,3-di-(trimethylsilyl)cyclopentadienyl]titanium dimethoxide; bis[1,2,4-tri(trimethylsilyl)cyclopentadienyl] titanium dimethoxide; bisindenyltitanium dimethoxide; bisfluorenyltitanium dimethoxide; methylenebiscyclopentadienyltitanium dimethoxide; ethylidenebiscyclopentadienyltitanium dimethoxide; methylenebis(2,3,4,5-tetramethylcyclopentadienyl)titanium dimethoxide; ethylidenebis(2,3,4,5-tetramethylcyclopentadienyl)titanium dimethoxide; dimethylsilylbis(2,3,4,5-tetramethylcyclopentadienyl)titanium dimethoxide; methylenebisindenyltitanium dimethoxide; methylenebis(methylindenyl)titanium dimethoxide; ethylidenebisindenyltitanium dimethoxide; dimethylsilylbisindenyltitanium dimethoxide; methylenebisfluorenyltitanium dimethoxide; methylenebis(methylfluorenyl)titanium dimethoxide; ethylidenebisfluorenyltitanium dimethoxide; dimethylsilylbisfluorenyltitanium dimethoxide; methylene(cyclopentadienyl)(indenyl)titanium dimethoxide; ethylidene(cyclopentadienyl)(indenyl)titanium dimethoxide; dimethylsilyl(cyclopentadienyl)(indenyl)titanium dimethoxide; methylene(cyclopentadienyl)(fluorenyl)titanium dimethoxide; ethylidene(cyclopentadienyl)(fluorenyl)titanium dimethoxide; dimethylsilyl(cyclopentadienyl)(fluorenyl)titanium dimethoxide; methylene(indenyl)(fluorenyl)titanium dimethoxide; ethylidene(indenyl)(fluorenyl)titanium dimethoxide; dimethylsilyl(indenyl)(fluorenyl)titanium dimethoxide; isopropylidene(cyclopentadienyl)(fluorenyl) titanium dichloride; and isopropylidene(cyclopentadienyl) (fluorenyl)titanium dimethoxide.

Examples of the transition metal compounds represented by the formula (X) wherein M¹ is zirconium include ethylidenebiscyclopentadienylzirconium dichloride, ethylidenebiscyclopentadienylzirconium dimethoxide, dimethylsilylbiscyclopentadienylzirconium dimethoxide, etc. Examples of the hafnium compounds according to the general formula (X) include ethylidenebiscyclopentadienylhafnium dimethoxide, and dimethylsilylbiscyclopentadienylhafnium dimethoxide. Particularly desirable transition-metal compounds among them are titanium compounds.

In addition to the combinations of the above, the compound may be a bidentate coordination complex such as 2,2'-thiobis(4-methyl-6-tert-butylphenyl)titanium diisopropoxide and 2,2'-thiobis(4-methyl-6-tert-butylphenyl)titanium dimethoxide.

As the component (B) which constitutes the primary ingredient of the catalyst in the process according to the present invention, that is, a coordination complex compound comprising a cation and an anion in which a plurality of radicals are bonded to a metal, a variety of such coordination complex compounds are available, and those represented by the following general formulae (XI) or (XII) are preferably employed:

([L¹-H]^{g+})ₕ([M²X¹X²---X^{s}]^{(s-t)-})ᵢ (XI)

or

([L²]^{g+})ₕ([M³X¹X²---X^{s}]^{(s-t)-})ᵢ (XII)

wherein L² is M⁴, T¹T²M⁵ or T³₃C as hereinafter descirbed; L₁ is a Lewis base; M² and M³ are each a metal selected from Groups 5 to 15 of the Periodic Table ; M⁴ is a metal selected from Groups 8 to 12 of the Periodic Table; M⁵ is a metal selected from Groups 8 to 10 of the Periodic Table; X¹ to X^{s} are each a hydrogen atom, dialkylamino group, alkoxy group, aryloxy group, alkyl group having 1 to 20 carbon atoms, aryl group, alkylaryl group, arylalkyl group, substituted alkyl group, substituted aryl group, organometalloid group or halogen atom; T¹ and T² are each a cyclopentadienyl group, substituted cyclopentadienyl group, indenyl group or fluorenyl group; T³ is an alkyl group; t is the valency of each of M² and M³, indicating an integer of 1 to 7; s is an integer of 2 to 8; g is the ion valency of each of [L¹-H] and [L²], indicating an integer of 1 to 7; h is an integer of 1 or more; and i=h x g/(s-t).

Specific examples of M² and M³ include B, Al, Si, P, As and Sb; those of M⁴ include Ag and Cu.; and those of M⁵ include Fe, Co and Ni. Specific examples of X¹ to Xⁿ include dialkylamino group such as dimethylamino and diethylamino; alkoxyl group such as methoxy, ethoxy and n-butoxy; aryloxy group such as phenoxy, 2,6-dimethylphenoxy and naphthyloxy; alkyl group having 1 to 20 carbon atoms such as methyl, ethyl, n-propyl, iso-propyl, n-butyl, n-octyl and 2-ethylhexyl; aryl group having 6 to 20 carbon atoms, alkylaryl group or arylalkyl group such as phenyl, p-tolyl, benzyl, pentafluorophenyl, 3,5-di(trifluoromethyl)phenyl, 4-tert-butylphenyl, 2,6-dimethylphenyl, 3,5-dimethylphenyl, 2,4-dimethylphenyl and 1,2-dimethylphenyl; halogen such as F, Cl, Br and I; and organometalloid group such as pentamethylantimony group, trimethylsilyl group, trimethylgermyl group, diphenylarsine group, dicyclohexylantimony group and diphenylboron group. Specific examples of substituted cyclopentadienyl of T¹ and T² include methylcyclopentadienyl, butylcyclopentadienyl and pentamethylcyclopentadienyl.

Among the compounds represented by the above-mentioned general formula (XI) or (XII) specific examples of preferably usable compounds include, as the compound of general formula (XI), triethylammonium tetraphenylborate, tri(n-butyl)ammonium tetraphenylborate, trimethylammonium tetraphenylborate, triethylammonium tetra(pentafluorophenyl)borate, tri(n-butyl)ammonium tetra(pentafluorophenyl)borate, and triethylammonium hexafluoroarsenate, pyridinium tetra(pentafluorophenyl)borate, pyrrolium tetra(pentafluorophenyl)borate, N,N-dimethylanilinium tetra(pentafluorophenyl)borate, methyldiphenylammonium tetra(pentafluorophenyl)borate, and as the compound of general formula (XII), ferrocenium tetraphenylborate, dimethylferrocenium tetra(pentafluorophenyl)borate, ferrocenium tetra(pentafluorophenyl)borate, decamethylferrocenium tetra(pentafluorophenyl)borate, acetylferrocenium tetra(pentafluorophenyl)borate, formylferrocenium tetra(pentafluorophenyl)borate, cyanoferrocenium tetra(pentafluorophenyl)borate, silver tetraphenylborate, silver tetra(pentafluorophenyl)borate, trityltetraphenylborate, trityltetra(pentafluorophenyl)borate, silver hexafluoroarsenate, silver hexafluoroantimonate, and silver tetrafluoroborate.

In the process of the present invention, if desired, in addition to the above components (A) and B, another catalytic components such as organoaluminum compound (C) may be added.

The organoaluminum compound (C) includes the compound represented by the formula:

R²⁰ ⱼAl(OR²¹)ₓH_{y}X¹ _{z} (XIII)

wherein R²⁰ and R²¹ each independently represent an alkyl group having 1 to 8 carbon atoms, preferably 1 to 4 carbon atoms; X¹ represents a halogen; j, x, y and z are O<j≦3, 0≦x<3 0≦y<3 and 0≦z<3, respectively, and j+x+y+z=3.
The activity of the catalyst is further improved by adding the above compound.

The organoaluminum compound represented by the above formula (XIII) can be exemplified as shown below. Those corresponding to y=z=0 are represented by the formula: R²⁰ⱼAl(OR²¹)₃₋ⱼ (wherein R²⁰ and R²¹ are as defined above and j is preferably a number of 1.5≦j≦3). Those corresponding to x=y=0 are represented by the formula: R²⁰ⱼAlX¹₃₋ⱼ (wherein R²⁰ and X¹ are as defined above and j is preferably a number of 0<j<3). Those corresponding to x=z=0 are represented by the formula: R²⁰ⱼAlH₃₋ⱼ (wherein R²⁰ is as defined above and j is preferably a number of 2≦j<3). Those corresponding to y=0 are represented by the formula: R²⁰ⱼAl(OR²¹)ₓX¹_{z} (wherein R²⁰, R²¹ and X¹ are as defined above and 0<j≦3, 0≦x<3, 0≦z<3 and j+x+z=3).

In the organoaluminum, compound represented by the formula (XIII), the compound wherein x=z=0 and j=3 is selected from, for example, trialkylaluminum such as trimethylaluminum, triethylaluminum and tributylaluminum, or combination thereof. In the case of y=z=0 and 1.5≦j<3, included are dialkylaluminum alkoxide such as diethylaluminum ethoxide and dibutylaluminum butoxide; alkylaluminum sesquialkoxide such as ethylaluminum sesquiethoxide and butylaluminum sesquibutoxide; as well as partially alkoxylated alkylaluminum having an average composition represented by R²⁰_{2.5}Al(OR²¹)_{0.5}. Examples of the compound corresponding to the case where x=y=0 include a partially halogenated alkylaluminum including dialkylaluminum halogenide (j=2) such as diethylaluminum chloride, dibutylaluminum chloride and diethylaluminum bromide; alkylaluminum sesquihalogenide (j=1.5) such as ethylaluminum sesquichloride, butylaluminum sesquichloride and ethylaluminum sesquibromide; and alkylaluminum dihalogenide (j=1) such as ethylaluminum dichloride, propylaluminum dichloride and butylaluminum dibromide. Examples of the compound corresponding to the case in which x=z=0 includes a partially hydrogenated alkylaluminum including dialkylaluminum hydride (j=2) such as diethylaluminum hydride and dibutylaluminum hydride; alkylaluminum dihydride (j=1) such as ethylaluminum dihydride and propylaluminum dihydride. Examples of the compound corresponding to the case in which y=0 include a partially alkoxylated or halogenated alkylaluminum such as ethylaluminumethoxy chloride, butylaluminumbutoxy chloride and ethylaluminumethoxy bromide (j=x=z=1). Of these, triisobutylaluminum and triisobutylaluminum hydride are particularly suitable.

The catalyst to be used in the process according to the present invention comprises the above-mentioned Components (A) and (B) or (A), (B) and (C) as the main components, and in addition, other catalytic components may be added if necessary.

The method of adding each component of the catalyst to the reaction system is not limited, but allowable in a variety of manners, and is exemplified by [1] a method wherein each component is separately added to the system to bring each component into contact with the above-mentioned starting comonomers; [2] a method wherein the reaction product of the component (A) and component (B) is added to the system to bring the product into contact with the above-mentioned starting comonomers; [3] a method wherein the reaction product of any two of the components (A), (B) and (C) is incorporated with the balance and the mixture thereof is added to the system to bring the mixture into contact with the above-mentioned starting comonomers, more specifically, a method wherein the component (C) is added to the reaction product of components (A) and (B) and the mixture thereof is added to the system to bring the mixture into contact with the above-mentioned starting comonomer or a method wherein the component (B) is added to the reaction product of components (A) and (C) and the mixture thereof is added to the system to bring the mixture into contact with the above-mentioned starting comonomer; and [4] a method wherein the reaction product of the three components (A), (B) and (C) is added to the system to bring the product into contact with the above-mentioned starting comonomers. In the preceding case, the reaction product of components (A) and (B) may be previously isolated and purified.

The compounding ratio of the components (A) and (B) in the above-mentioned catalyst varies depending on the conditions, and can not be defined unconditionally, but usually it is 0.1:1 to 1:0.1 in terms of the molar ratio of the component (A) to the component (B). In the case of the component (C) being used, the molar ratio of the component (A) to the component (C) is 1:0.1 to 1:1000, preferably 1:0.1 to 1:200.

In the process according to the present invention, (a) a styrenic monomer and (b) a monomer selected from the group consisting of indenic monomer, acenaphthylenic monomer and a vinylic monomer containing a polar group are copolymerized in the presence of the aforestated catalyst, and the copolymerization may be put into practice by a variety of ways including bulk, solution and suspension polymerization. Specifically, (a) a styrenic monomer is polymerized in the presence of the aforementioned catalyst to substantially produce a polymer, which thereafter is copolymerized with (b) a monomer selected from the group consisting of indenic monomer, acenaphthylenic monomer and a vinylic monomer containing a polar group. The above copolymerization may be effected by a variety of ways including bulk, solution and suspension polymerization. It is also possible to polymerize (a) a styrenic monomer in the presence of the aforesaid catalyst to substantially produce a polymer, followed by the addition of (b) a monomer selected from the group consisting of indenic monomer, acenaphthylenic monomer and a vinylic monomer containing a polar group to successively proceed with copolymerization reaction (two-stage polymerization).

The usable solvents in copolymerization are exemplified by aliphatic hydrocarbons such as pentane, hexane, heptane and decane, alicyclic hydrocarbons such as cyclohexane and aromatic hydrocarbons such as benzene, toluene and xylene. Polymerization temperature is not specifically limited, but it is usually 0 to 100°C, preferably 10 to 80°C. Polymerization time is usually 5 minutes to 24 hours, preferably 1 hour or longer.

In the case of two-stage polymerization, polymerization temperature is usually set at 0 to 100°C, preferably 10 to 80°C and polymerization time is 5 seconds to 5 hours for the first stage polymerization, and for the second stage polymerization (copolymerization) copolymerization temperature is usually -78 to 120°C, preferably -10 to 80°C and copolymerization time is 5 seconds to 24 hours.

The styrenic copolymer obtainable by the process according to the present invention has a high degree of syndiotactic configuration in the main chain structure of the repeating unit derived from styrenic monomer. Moreover, the styrenic copolymer having an extremely high syndiotacticity and purity can be obtained by subjecting the copolymer obtained by the above procedure to deashing treatment with a cleaning liquid containing hydrochloric acid as necessary, further cleaning, drying under reduced pressure, followed by cleaning with a solvent such as methyl ethyl ketone (MEK) for removing MEK insolubles.

The styrenic copolymer thus obtained comprises at least one kind of repeating unit derived from (a) a styrenic monomer (repeating unit "a") and at least one kind of repeating unit derived from (b) a monomer selected from the group consisting of indenic monomer, acenaphthylenic monomer and a vinylic monomer containing a polar group (repeating unit "b"). Therefore, the process according to the present invention enables the synthesis of not only copolymers but also terpolymers and quadripolymers comprising the aforementioned repeating units. The content of the above repeating unit "b" is suitably selected in accordance with the feed ratio of the starting monomer, and in the case of acrylonitrile-based or unsaturated carboxylic acid-based monomer, the ratio of the repeating unit "b" is usually 0.1 to 50% by weight, preferably 1.0 to 20% by weight based on the total weight of the copolymer. The above ratio less than 0.1% by weight causes an excessively high crystallization rate failing to sufficiently widen the melt-forming temperature region, while the ratio exceeding 50% by weight results in low crystallizing performance and failure to obtain a crystallized molding. The copolymer thus obtained has a molecular weight, in terms of intrinsic viscosity of usually 0.07 to 20 dl/g, preferably 0.3 to 10 dl/g as measured in 1,2,4-trichlorobenzene at 135°C. The intrinsic viscosity less than 0.07 dl/g results in a product unsuitable for practical use because of poor dynamic properties thereof, whereas that more than 20 dl leads to a product difficult in ordinary melt forming.

In the case where the monomer containing a polar group is a nitrogen-containing vinylic monomer, the ratio of the repeating unit "b" is usually 0.01 to 99.9% by weight, desirably 0.01 to 80% by weight, more desirably 0.1 to 60% by weight based on the total weight of the copolymer. The above ratio less than 0.01% by weight fails to sufficiently exihibit the effect of improvement on antistatic property etc. which is one of the objects of the present invention, while that more than 99.9% leads to a failure to develop the heat resistance which characterizes the styrenic polymer having syndiotactic configuration. The copolymer containing the nitrogen-containing vinylic monomer as the repeating unit "b" has a molecular weight, in terms of intrinsic viscosity of usually 0.01 to 20 dl/g, preferably 0.1 to 15 dl/g as measured in 1,2,4-trichlorobenzene as solvent at 135°C. The intrinsic viscosity less than 0.01 dl/g results in a product unsuitable for practical application because of poor dynamic properties thereof, whereas that more than 20 dl/g leads to a product unsuitable for ordinary melt forming.

In the case of heteroatomic unsaturated hydrocarbon, the ratio of the repeating unit "b" is usually 0.01 to 99.9 mol%, desirably 0.05 to 90 mol%, particularly desirably 0.05 to 40 mol% based on the total molar quantity of the copolymer. The above ratio of less than 0.01 mol% fails to sufficiently exhibit the effect of improvement on the compatibility with other types of resins because of lowered interfacial adhesion, whereas the ratio of more than 99.9 mol% leads to the loss of chemical resistance which characterizes the styrenic polymer having syndiotactic configuration because of the impaired crystallization, and also to the liability to being colored (burning). The copolymer containing the heteroatomic unsaturated hydrocarbon as the repeating unit "b" has a molecular weight, in terms of intrinsic viscosity of usually 0.01 to 20 dl/g, preferably 0.3 to 10 dl/g as measured in 1,2,4-trichlorobenzene at 135°C. The intrinsic viscosity of less than 0.01 dl/g results in a product unsuitable for practical application because of poor dynamic properties thereof, while that more than 20 dl/g lead to a product difficult in ordinary melt molding.

The styrenic copolymer thus obtained by the process of the present invention comprises the above-mentioned repeating units and has a high degree of syndiotactic configuration in the main chain structure of styrenic repeating unit.

Here, the styrenic polymer which has a high degree of syndiotactic configuration means that its stereochemical structure is of high degree of syndiotactic configuration, i,e. the stereostructure in which phenyl groups or substituted phenyl groups as side chains are located alternately at opposite directions relative to the main chain consisting of carbon-carbon bonds (recemate). Tacticity is quantitatively determined by the nuclear magnetic resonance method (¹³C-NMR method) using carbon isotope as a probe. The tacticity as determined by the ¹³C-NMR method can be indicated in terms of proportions of structural units continuously connected to each other, i.e., a diad in which two structural units are connected to each other, a triad in which three structural units are connected to each other and a pentad in which five structural units are connected to each other. "The styrenic copolymers having such a high degree of syndiotactic configuration as mentioned in the present invention means a copolymer having such a syndiotacticity that the proportion of racemic diad is at least 75%, preferably at least 85%, or the proportion of racemic pentad is at least 30%, preferably at least 50% in the main chain structure of styrenic repeating units. However, the degree of syndiotactic configuration varies to some extent depending on the types of substituents and the proportion of the repeating unit "a".

By virtue of using a highly active and comparatively inexpensive catalyst, the process according to the present invention is capable of reducing the requirement of the catalyst in the production of a styrenic copolymer as well as the catalyst residue contained in the copolymer obtained, thus unnecessitating or simplifying the deashing process, and therefore enables efficient production of a styrenic copolymer having a high degree of syndiotactic configuration in its stereochemical structure with the reduction of the catalyst cost. Consequently the copolymer having a variety of functional groups obtained by the process of the present invention proves to be a resin excellent in heat resistance and mechanical strength and finds a wide diversity of effective applications as raw materials of various molded products and as additives for enhancing adhesion strength to a resin composition of syndiotactic styrenic polymer with other type of resin having a polar groug or glass fiber.

In what follows, the present invention will be described in more detail with reference to examples and comparative examples.

### Example 1

### (1) Synthesis of catalyst

### Preparation of tri(n-butyl)ammonium tetra(pentafluorophenyl)borate

Pentafluorophenyllithium which was prepared from 152 mmol of bromopentafluorobenzene and 152 mmol of butyllithium was reacted with 45 mmol of trichloroboron in hexane to produce tri(pentafluorophenyl)boron as white solid, 41 mmol of which was reacted with 41 mmol of pentafluorophenyllithium to produce lithium tetra(pentafluorophenyl)borate as white solid and isolate the same.

Then, 16 mmol of lithium tetra(pentafluorophenyl)borate was reacted with 16 mmol of tri-n-butylamine hydrochloride in water to produce 12.8 mmol of tri(n-butyl)ammonium tetra(pentafluorophenyl)borate as white solid.

### (2) Production of styrene glycidyl methacrylate copolymer

In a dry 100 ml reaction vessel were placed 20 ml of styrene and 0.03 mmol of triisobutylaluminum (TIBA) as the catalyst component, in an nitrogen atmosphere and the mixture was allowed to stand at 50°C for 30 minutes.

Into the reaction vessel were further introduced 0.5 µmol of tri(n-butyl)ammonium tetra(pentafluorophenyl)borate as prepared in the above item (1) and 0.5 µmol of pentamethylcyclopentadienyltrimethyltitanium to initiate polymerization with stirring. After 1 hour of reaction, a solution of 10 mmol of glycidyl methacrylate in toluene (2 mol/l) was added to the reaction system to proceed with reaction for further 1 hour. Thereafter methanol was poured in the system to arrest copolymerization. The copolymer was obtained in a yield of 3.61 g with copolymerization activity of 151 kg/g-Ti and 4.46 kg/g-Al. The copolymer thus obtained was subjected to Soxhlet extraction by the use of methyl ethyl ketone (MEK) for 8 hours to remove amorphous polymer with the result that insoluble portion was 92%. The copolymer had an intrinsic viscosity (η) of 3.91 dl/g. Moreover ¹³C-NMR analysis of the copolymer exhibited a sharp peak at 145.2 ppm, demonstrating the syndiotactic configuration of the styrene chain.

As the result of IR analysis of the copolymer, absorption assigned to carbonyl group was observed at around 1730 cm⁻¹, and it was proved that the proportion of glycidyl methacrylate unit as measured by ¹H-NMR was 0.2 mol%. The results obtained are given in Table 1.

### Examples 2-10

The procedure in Example 1-(2) was repeated except that the comonomers each shown in Table 1 were used in place of glycidyl methacrylate to produce each copolymer. The results obtained are given in Table 1.

### Examples 11 and 12

The procedure in Example 1-(2) was repeated except that glycidyl methacrylate was used in an amount different from that used therein to produce copolymer. The results obtained are given in Table 1.

### Example 13

The procedure in Example 1-(2) was repeated except that p-methylstyrene was used in place of styrene to produce a copolymer. The results obtained are given in Table 1.

### Example 14

### (1) Preparation of ferrocenium tetra(pentafluorophenyl)borate

Pentafluorophenyllithium which was prepared from 152 mmol of bromopentafluorobenzene and 152 mmol of butyllithium was reacted with 45 mmol of trichloroboron in hexane to produce tri(pentafluorophenyl)boron as white solid, 41 mmol of which was reacted with 41 mmol of pentafluoropenyllithium to produce lithium tetra(pentafluorophenyl)boron as white solid and isolate the same.

Then 20 mmol (3.7 g) of ferrocene and 40 ml of concentrated sulfuric acid were reacted at room temperature for 1 hour to obtain a navy blue solution, which was poured in 1 l of water with stirring to form a dark blue solution. Then the solution was added to 500 ml of aqueous solution of 20 mmol (13.7 g) of lithium tetra(pentafluorophenyl)boron which was previously synthesized to form a light blue precipitate, which was collected by filtration, washed with 500 ml of water 5 times and dried under reduced pressure to obtain 14.7 g of objective ferrocenium tetra(pentafluorophenyl)borate.

### (2) Production of styrene/glycidyl methacrylate copolymer

The procedure in Example 1 was repeated except that ferrocenium tetra(pentafluorophenyl)borate as prepared above was used in place of tri(n-butyl)ammonium tetra(pentafluorophenyl)borate, and the order of addition of the above ferrocenium compound and pentamethylcyclopentadienyltrimethyltitanium was inverted to produce copolymer. The results obtained are given in Table 1.

### Example 15

The procedure in Example 1 was repeated except that pentamethylcyclopentadienyltribenzyltitanium was used in place of pentamethylcyclopentadienyltrimethyltitanium to produce a copolymer. The results obtained are given in Table 1.

### Comparative Example 1

The procedure in Example 1 was repeated except that methylaluminoxane (MAO), triisobutylaluminum (TIBA) and pentamethylcyclopentadienyltitanium trimethoxide [Cp*Ti(OMe)₃] were employed as the catalytic components, and that TIBA and MAO were added to styrene, and after 30 minutes, [Cp*Ti(OMe)₃] was added thereto to initiate polymerization and produce a copolymer. The results obtained are given in Table 1.

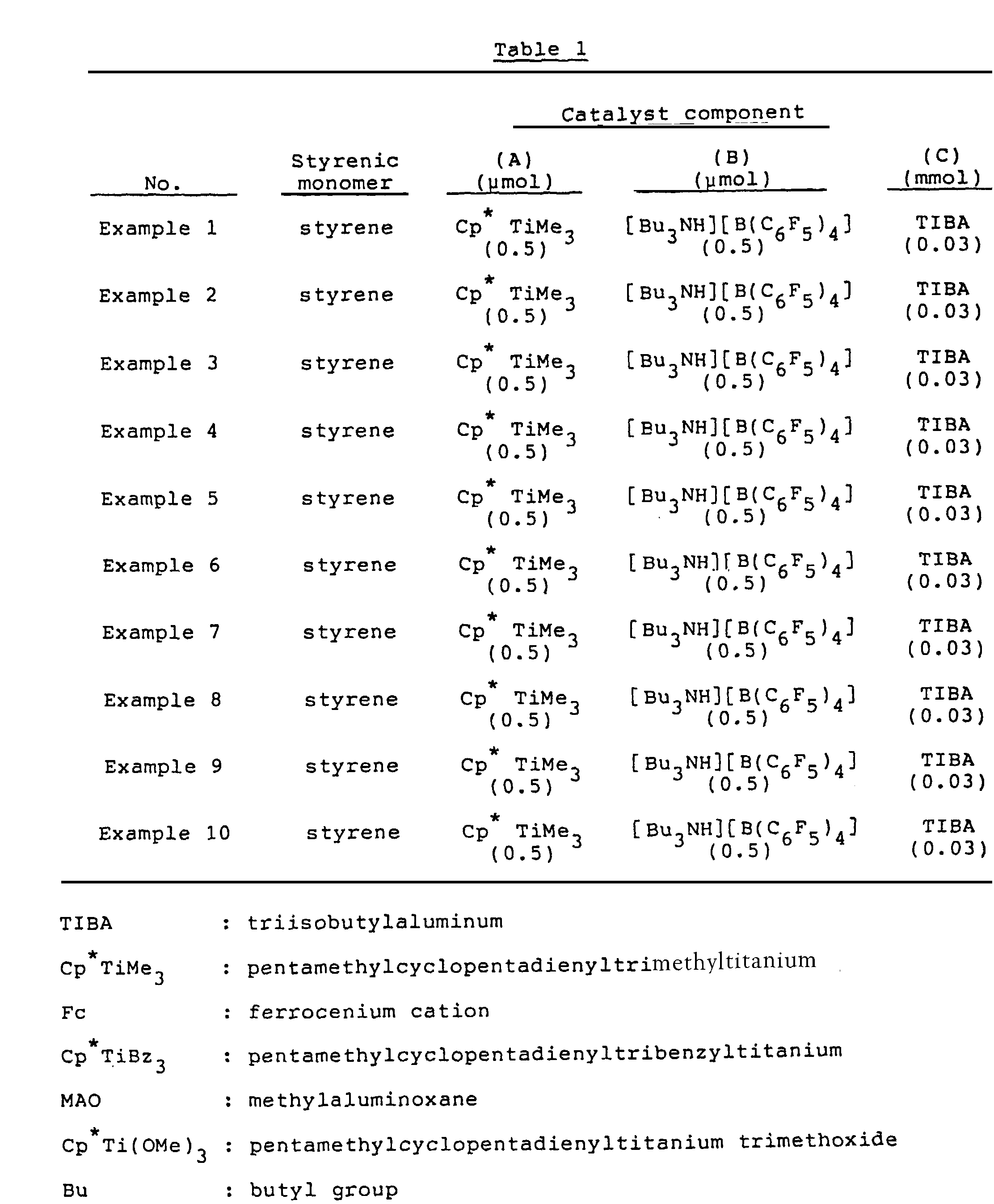

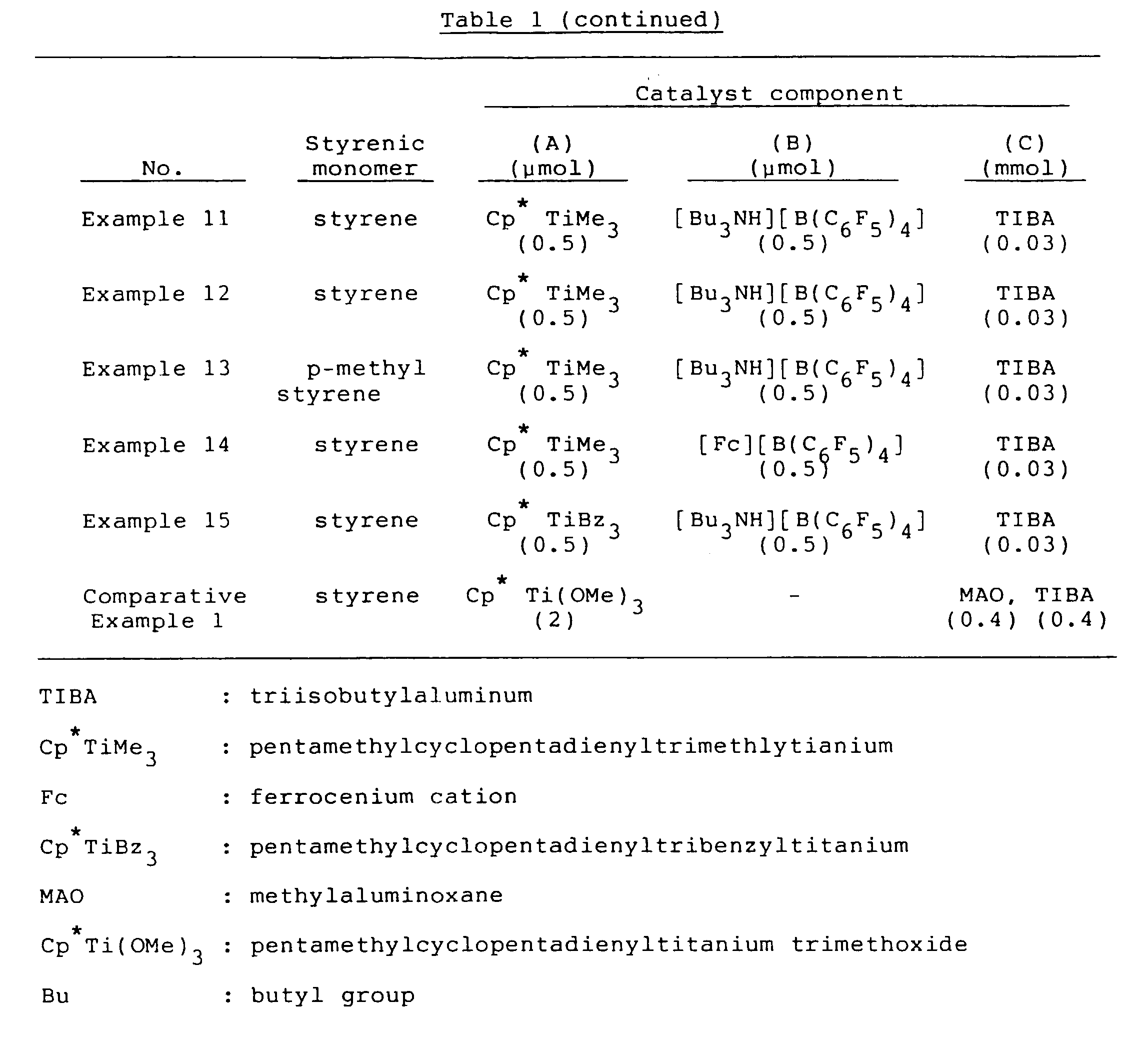

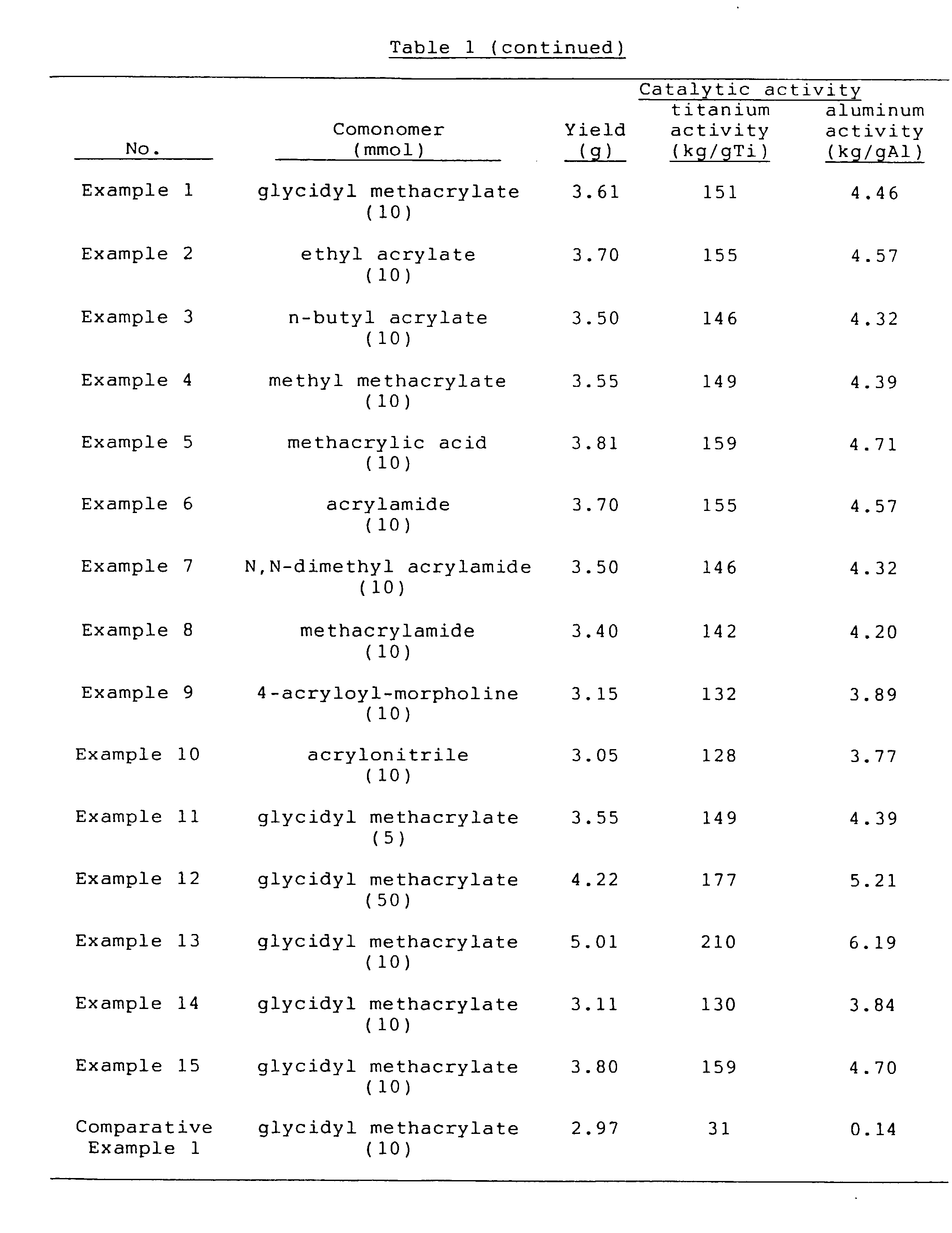

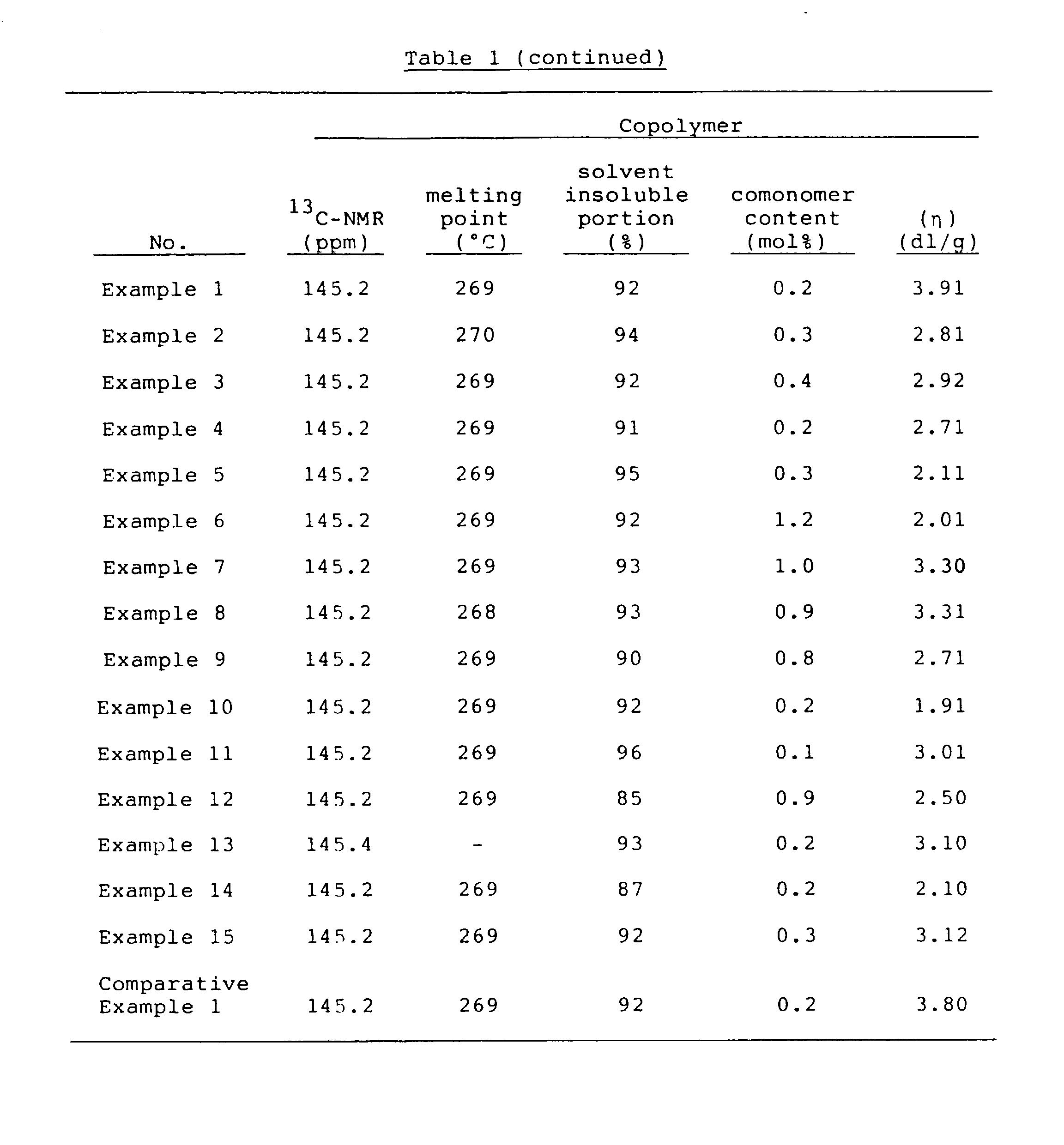

### Example 16

### Production of styrene/maleic anhydride copolymer

In a dry 100 ml reaction vessel were placed 20 ml of styrene and 0.03 mmol of triisobutyl aluminum (TIBA) as the catalyst component in an argon atmosphere, and the mixture was allowed to stand at 70°C for 30 minutes.

Into the reaction vessel were further introduced 0.5 µmol of tri(n-butyl)ammonium tetra(pentafluorophenyl)borate as prepared in Example 1-(1) and 0.5 µmol of pentamethylcyclopentadienyltrimethyltitanium to initiate the copolymerization with stirring. After 1 hour of reaction, a solution of 10 mmol of maleic anhydride in toluene (2 mol/l) was added to the reaction system to proceed with reaction for further 1 hour. Thereafter methanol was poured in the system to arrest the copolymerization. The copolymer was obtained in a yield of 4.2 g with copolymerization activity of 175 kg/g-Ti and 5.19 kg/g-Al. The copolymer thus obtained was subjected to Soxhlet extraction by the use of methyl ethyl ketone (MEK) for 8 hours to remove amorphous polymer with the result that insoluble portion was 94%. The copolymer had an intrinsic viscosity (η) of 2.91 dl/g. Moreover, ¹³C-NMR analysis of the copolymer exhibited a sharp peak at 145.2 ppm, demonstrating the syndiotactic configuration of the styrene chain.

As the result of IR analysis of the copolymer, absorption assigned to carbonyl group was observed at around 1780 cm⁻¹, and it was proved that the proportion of maleic anhydride unit as measured by ¹H-NMR was 3.1%. The results obtained are given in Table 2.

### Examples 17-21

The procedure in Example 16 was repeated except that the comonomers each shown in Table 2 were used in place of maleic anhydride to produce each copolymer. The results obtained are given in Table 2.

### Examples 22 and 23

The procedure in Example 16 was repeated except that maleic anhydride was used in an amount different from that used therein to produce a copolymer. The results obtained are given in Table 2.

### Example 24

The procedure in Example 16 was repeated except that p-methylstyrene was used in place of styrene to produce a polymer. The results are given in Table 2.

### Example 25

### Production of styrene/maleic anhydride copolymer

The procedure in Example 16 was repeated except that ferrocenium tetra(pentaflucrophenyl)borate as prepared above was used in place of tri(n-butyl)ammonium tetra(pentafluorophenyl)borate, and the order of addition of the above ferrocenium compound and pentamethylcyclopentadienyltrimethyltitanium was inverted to produce a copolymer. The results obtained are given in Table 2.

### Example 26

The procedure in Example 16 was repeated except that pentamethylcyclopentadienyltribenzyltitanium was used in place of pentamethylcyclopentadienyltrimethyltitanium to produce a copolymer. The results obtained are given in Table 2.

### Comparative Example 2

The procedure in Example 16 was repeatd except that methylaluminoxane (MAO), triisobutylaluminum (TIBA) and pentamethylcyclopentadienyltitanium trimethoxide [Cp∗Ti(OMe)₃] were employed as the catalytic components, and that TIBA and MAO were added to styrene and after 30 minutes, [Cp∗Ti(OMe)₃] was added thereto to initiate polymerization and produce a copolymer. The results obtained are given in Table 2.

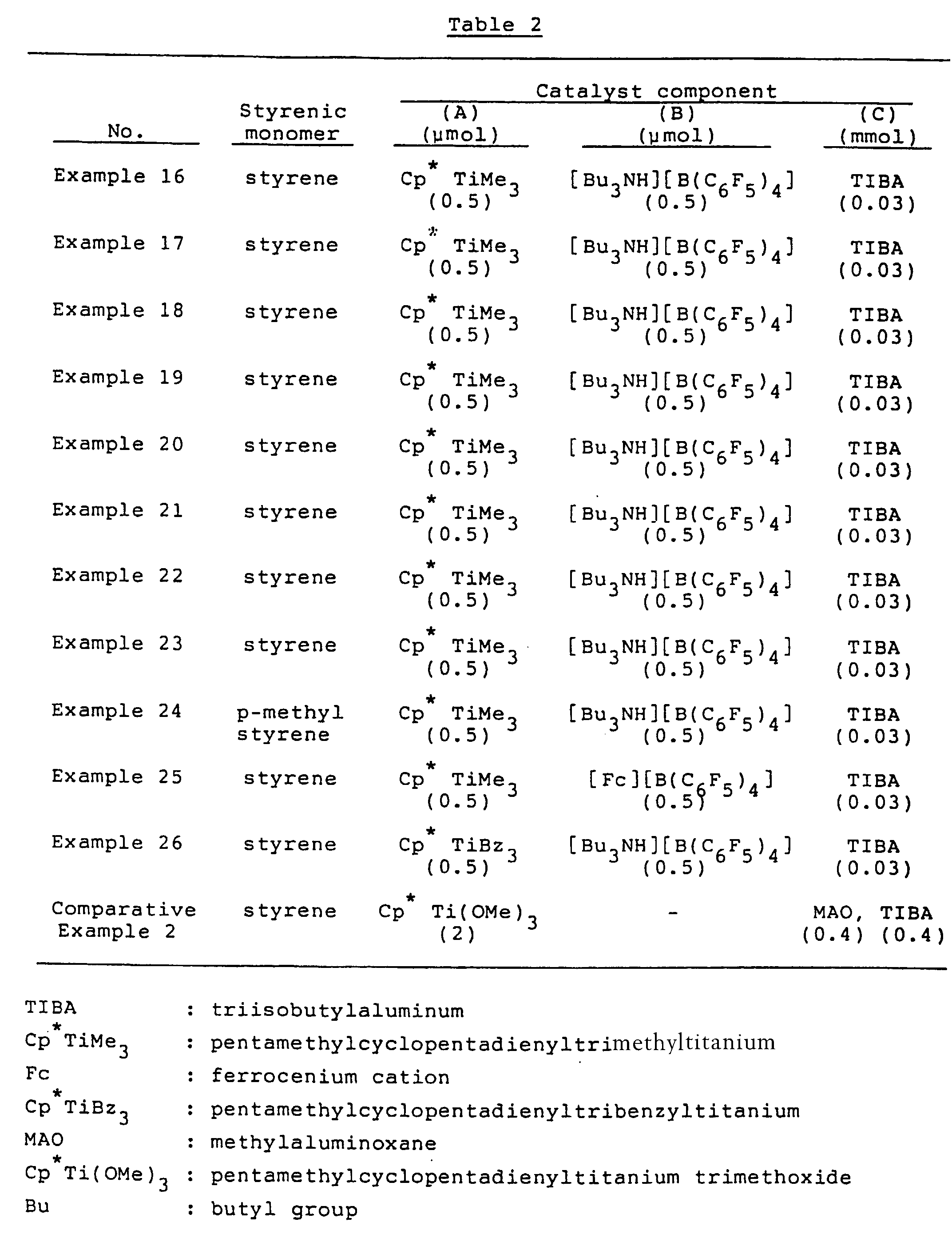

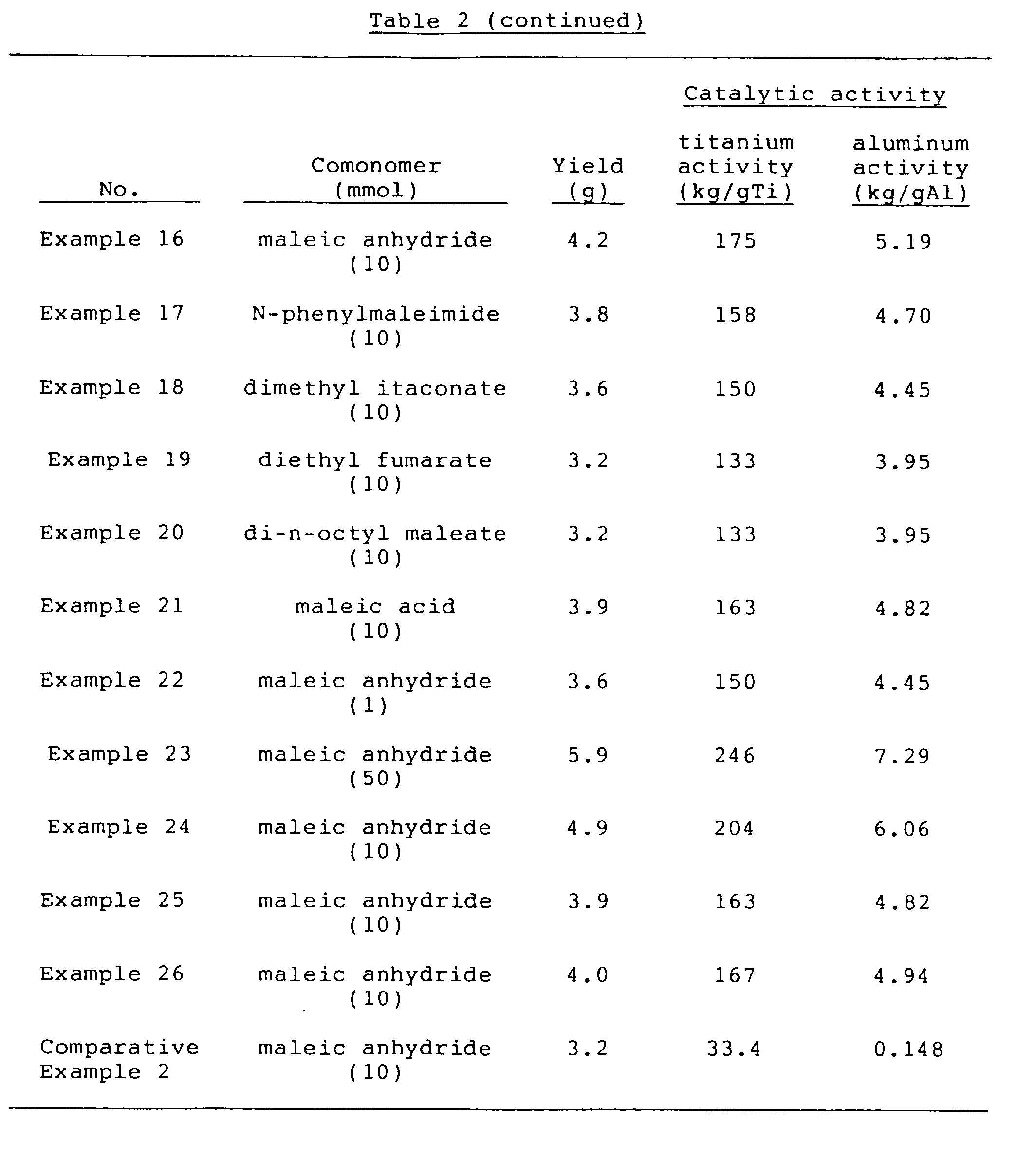

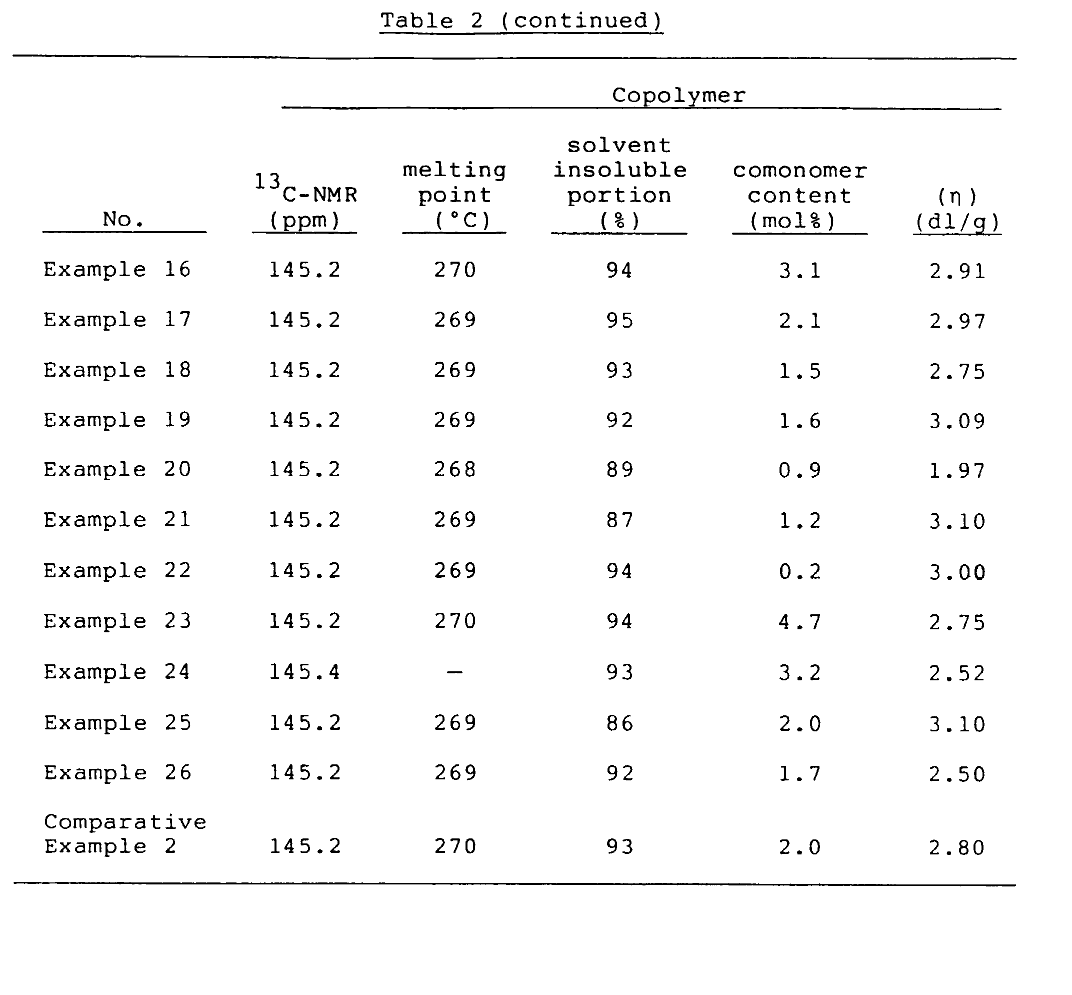

### Example 27

### Production of styrene/acenaphthylene copolymer

In a dry 20 ml reaction vessel were placed 2 ml of toluene, 0.03 mmol of triisobutylaluminum (TIBA) and 15.8 mmol of styrene at room temperature in an argon atmosphere, and the mixture was allowed to stand at 70°C.

Into the reaction vessel were further introduced 0.5 µmol of tri(n-butyl)ammonium tetra(pentafluorophenyl)borate as prepared in Example 1-(1), 0.5 µmol of pentamethylcyclopentadienyltrimethyltitanium and a solution of 1.75 mmol of acenaphthylene in 6.9 ml of toluene to react for 2 hours. Thereafter methanol was poured in the vessel to arrest the reaction, the mixture was filtered and the cake was cleaned twice with MEK and further with methanol 3 times and dried under reduced pressure to obtain 0.61 g of the copolymer. The copolymer thus obtained had copolymerization activity of 25.5 kg/g-Ti and 0.75 kg/g-Al.

The molecular weight of the copolymer was determined by means of gel-permeation chromatography (GPC). As the result, the weight-average molecular weight (Mw) thereof was 45,000 expressed in terms of polystyrene (PS).

As the result of ¹³C-NMR analysis of the polymer by the use of carbon isotope, a sharp peak was observed at 145.2 ppm, proving the syndiotactic configuration in the main chain structure of styrenic unit.

The melting point (Tm) of the copolymer was obtained by differential scanning calorimetry (DSC) in which the temperature was lowered to 30°C at a rate of 7°C/min. (first cooling), maintained at 30°C for 5 min. and raised to 300°C at a rate of 20°C/min. (second heating). The result was 269°C. The compositional proportion of the copolymer was obtained by a method of calibration curve of infrared absorption spectrum in which a mixture of polyacenaphthylene obtained by radical polymerization with syndiotactic polystyrene obtained by a known process, which mixture being uniformly blended at a prescribed ratio, each of the infrared absorption spectra (IR) was determined, a calibration curve was prepared from the ratio of absorption peak intensity at 696 cm⁻¹ and the compositional proportion of the copolymer was determined from the ratio of absorption peak intensity at 696 cm⁻¹ to that at 814 cm⁻¹ for the copolymer thus obtained as well as the above calibration curve. As a result, an acenaphthylene/styrene compositional proportion was 0.9/99.1. The results of the above measurement are given in Table 3.

### Example 28

The procedure in Example 27 was repeated except that 12.3 mmol of styrene and 5.2 mmol of acenaphthylene were used. The results obtained are given in Table 3.

### Comparative Example 3

The procedure in Example 27 was repeated to prepare a copolymer except that after the feeding of toluene, 2x10⁻³ mol of TIBA (2 mol/l - toluene) and 2x10⁻³ mol of MAO (2.6 mol/l - toluene) were added each as a catalyst component, maintained at 70°C, and to the reaction liquid thus obtained was added as catalyst component 1x10⁻⁵ mol of [Cp∗Ti(OMe)₃] (0.01 mol/l - toluene). The results obtained are given in Table 3.

As the case with Example 27, 0.5 µmol of [Cp∗Ti(OMe)3] as Ti catalyst and 0.1 mmol of TIBA and aluminoxane were used, but a copolymer was obtained only in traces.

### Comparative Example 4

The procedure in Example 27 was repeated to prepare a copolymer except that after the feeding of toluene, 2x10⁻³ mol of TIBA (2 mol/l - toluene) and 2x10⁻³ mol of MAO (2.6 mol/l - toluene) were added each as a catalyst component, maintained at 70°C, and to the reaction liquid thus obtained was added as catalyst component 1x10⁻⁵ mol of [Cp∗Ti(OMe)₃] (0.01 mol/l - toluene). The results obtained are given in Table 3.

As the case with Example 27, 0.5 µmol of [Cp∗Ti(OMe)3] as Ti catalyst and 0.1 mmol of TIBA and aluminoxane were used, but a copolymer was obtained only in traces.

### Example 29

The procedure in Example 27 was repeated except that indene was used in place of acenaphthylene. The results obtained are given in Table 3.

### Example 30

### Production of styrene/acenaphthylene copolymer

The procedure in Example 27 was repeated except that ferrocenium tetra(pentafluorophenyl)borate prepared in Example 14-(1) was used in place of tri(n-butyl)ammonium tetra(pentafluorophenyl)borate. The results thus obtained are given in Table 3.

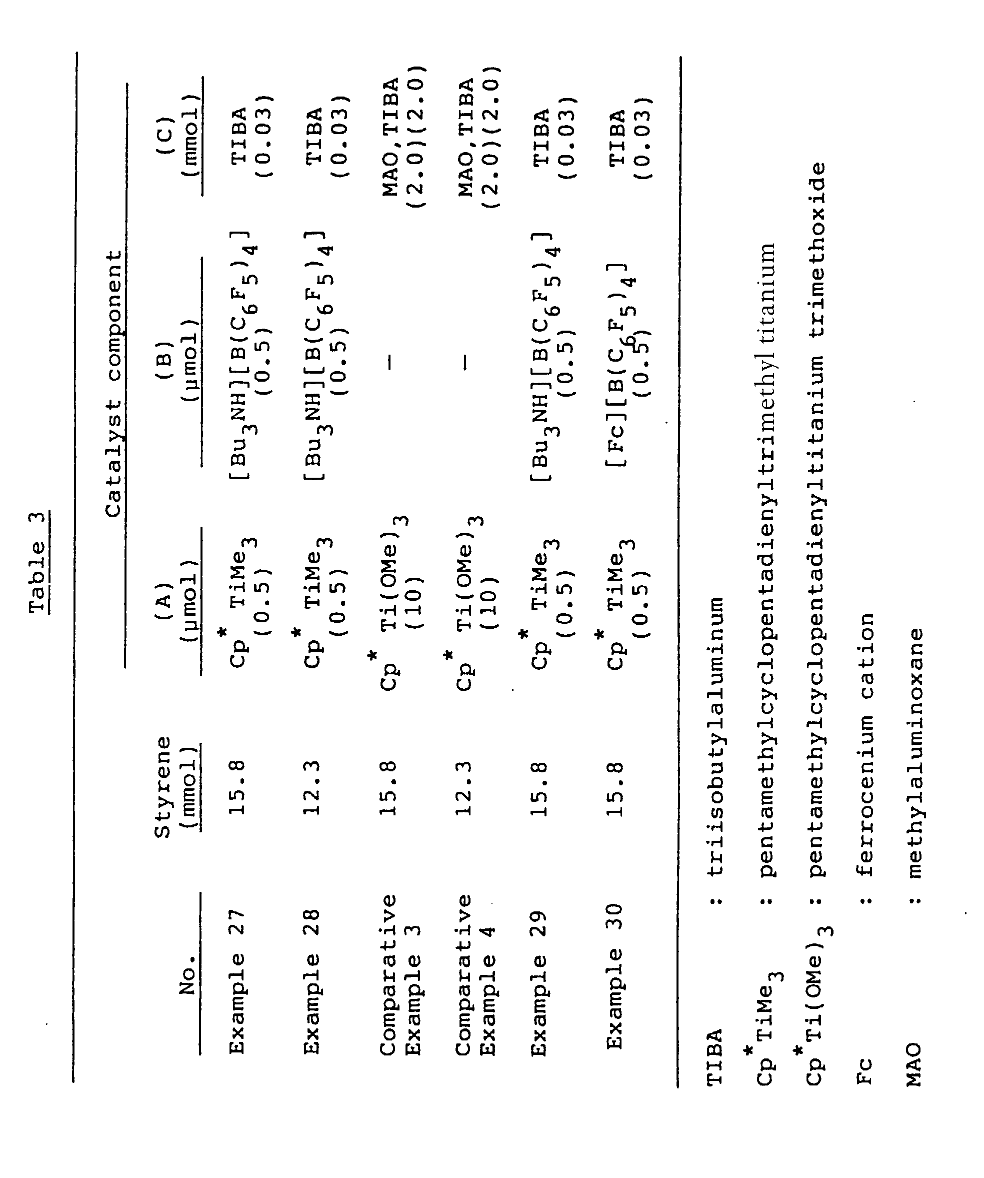

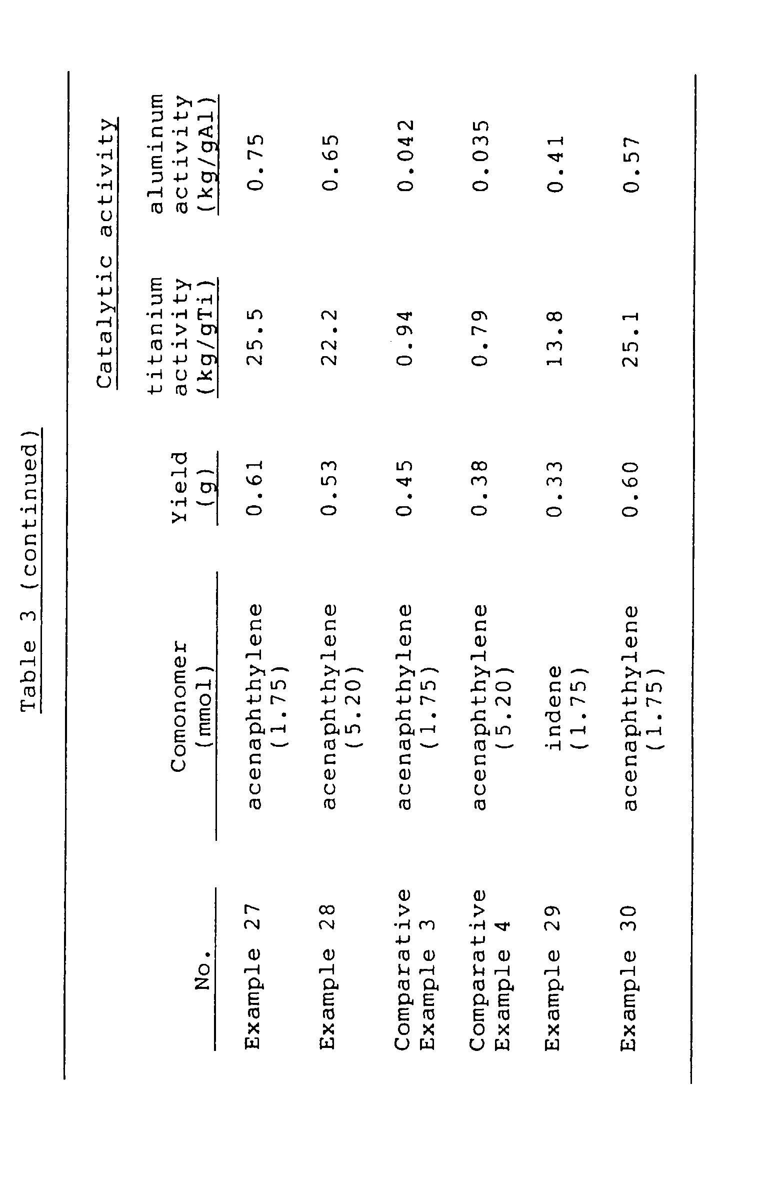

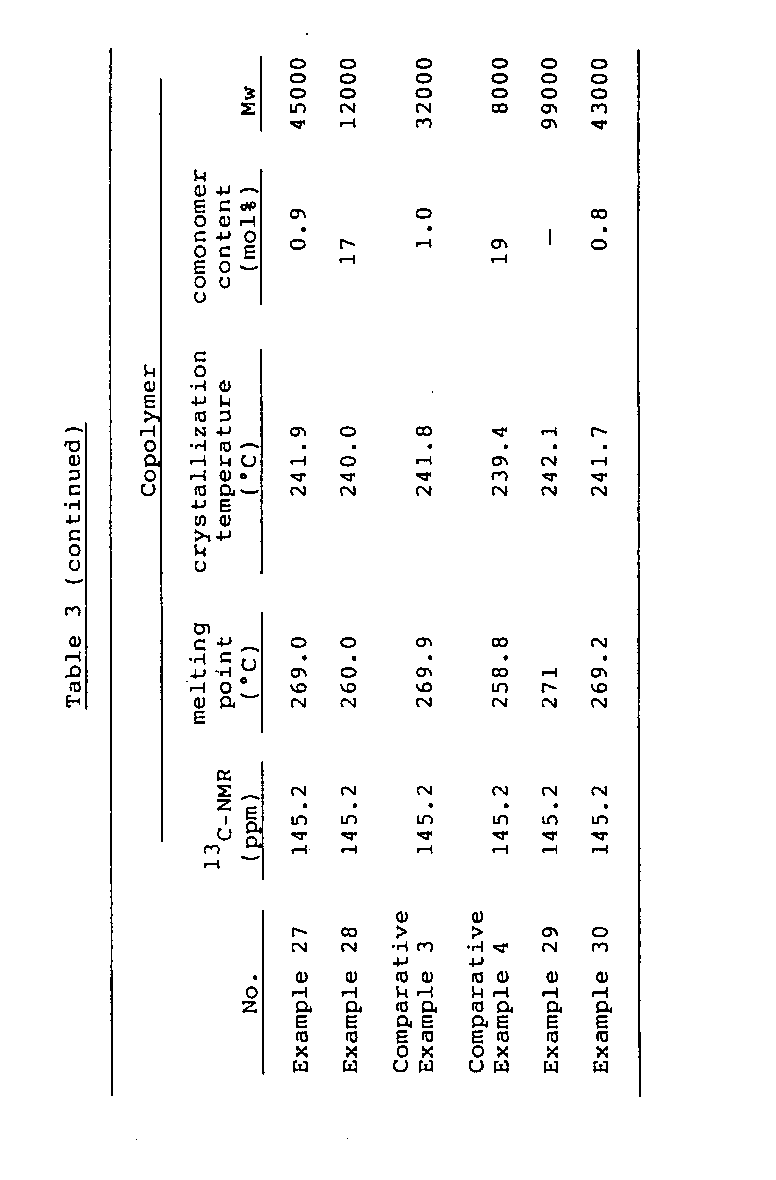

## Claims

1. A process for producing a styrenic copolymer having such degree of syndiotactic configuration in the main structure of the repeating unit derived from the styrenic monomer that the proportion of racemic diad is at least 75% which comprises copolymerizing (a) a styrenic monomer and (b) at least one monomer selected from the group consisting of indenic monomer, acenaphthylenic monomer and a vinylic monomer containing a polar group in the presence of a catalyst comprising as primary ingredients (A) a transition metal compound, (B) a coordination complex compound comprising a cation and an anion in which a plurality of radicals are bonded to a metal, and optionally (C) an organoaluminum compound.

2. The process according to Claim 1, wherein the monomer containing a polar group (b) is at least one monomer selected from the group consisting of maleic acid, maleic anhydride, fumaric acid, maleimide, maleimide anhydride, itaconic acid, itaconic anhydride and derivatives thereof.

3. The process according to Claim 1, wherein the catalyst comprises the reaction product of the components (A) and (B).

4. The process according to Claim 1, wherein the catalyst comprises a reaction product of any two of the components (A), (B) and (C) and the remaining component.

5. The process according to Claim 1, wherein the catalyst comprises the reaction product of the components (A), (B) and (C).

6. The process according to Claim 1, characterized in that (a) a styrenic monomer is polymerized in the presence of the catalyst comprising the components (A) and (B) to substantially form a polymer, and thereafter (b) at least one monomer selected from the group consisting of indenic monomer, acenaphthylenic monomer and a monomer containing a polar group is added to said polymer to successively copolymerise said polymer and said monomer.

## Patentansprüche

1. Verfahren zur Herstellung eines Styrolcopolymers mit einem solchen Grad der syndiotaktischen Konfiguration in der Hauptkette der Wiederholungseinheiten, die sich aus dem Styrolmonomer ableiten, daß der Anteil der racemischen Diaden mindestens 75 % aufweist, das umfaßt: Copolymerisieren eines (a) Styrolmonomers und (b) mindestens eines Monomers ausgewählt aus der Gruppe, die aus Indenmonomeren, Acenaphthylenmonomeren und einem Vinylmonomeren, das eine polare Gruppe enthält, besteht, in Gegenwart eines Katalysators, der als primäre Bestandteile (A) eine Übergangsmetallverbindung, (B) eine Koordinationskomplexverbindung, die ein Kation und ein Anion umfaßt, in dem eine Mehrzahl von Radikalen an ein Metall gebunden ist, und wahlweise (C) eine Organoaluminiumverbindung umfaßt.

2. Verfahren nach Anspruch 1, worin das Monomer (b), das eine polare Gruppe enthält, mindestens ein Monomer ist, das aus der Gruppe ausgewählt wird, die aus Maleinsäure, Maleinsäureanhydrid, Fumarsäure, Maleinimid, Maleinimidanhydrid, Itaconsäure, Itaconsäureanhydrid und Derivaten davon besteht.

3. Verfahren nach Anspruch 1, worin der Katalysator das Reaktionsprodukt der Komponenten (A) und (B) umfaßt.

4. Verfahren nach Anspruch 1, worin der Katalysator das Reaktionsprodukt von zwei der Komponenten (A), (B) und (C) und der verbleibenden Komponente umfaßt.

5. Verfahren nach Anspruch 1, worin der Katalysator das Reaktionsprodukt der Komponenten (A), (B) und (C) umfaßt.

6. Verfahren nach Anspruch 1, dadurch gekennzeichnet, daß ein Styrolmonomer (a) in Gegenwart eines Katalysators, der die Komponenten (A) und (B) umfaßt, polymerisiert wird, um im wesentlichen ein Polymer zu bilden, und danach mindestens ein Monomer (b), ausgewählt aus der Gruppe, die aus Indenmonomeren, Acenaphthylenmonomeren und einem Monomer, das eine polare Gruppe enthält, besteht, zu dem genannten Polymer hinzugegeben wird, um nacheinander das genannte Polymer und das genannte Monomer zu copolymerisieren.

## Revendications

1. Procédé de production d'un copolymère styrénique ayant un degré de configuration syndiotactique dans la structure principale du motif provenant du monomère styrénique tel que la proportion de diade racémique est d'au moins 75 %, qui comprend la copolymérisation (a) d'un monomère styrénique et (b) d'au moins un monomère choisi dans un groupe parmi un monomère indénique, un monomère acénaphtylénique et un monomère vinylique contenant un groupe polaire, en présence d'un catalyseur comprenant à titre d'ingrédients de base, (A) un composé de métal de transition, (B) un composé complexe coordonné comprenant un cation et un anion dans lequel plusieurs des radicaux sont liés à un métal, et éventuellement (C) un composé organoaluminique.

2. Procédé selon la revendication 1, dans lequel le monomère contenant un groupe polaire (b) est au moins un monomère choisi dans le groupe comprenant l'acide maléique, l'anhydride maléique, l'acide fumarique, le maléimide, l'anhydride de maléimide, l'acide itaconique, l'anhydride itaconique et leurs dérivés.

3. Procédé selon la revendication 1, dans lequel le catalyseur comprend le produit de réaction des composants (A) et (B).

4. Procédé selon la revendication 1, dans lequel le catalyseur comprend un produit de réaction de deux quelconques des composants (A), (B) et (C) et le composant restant.

5. Procédé selon la revendication 1, dans lequel le catalyseur comprend le produit de réaction des composants (A), (B) et (C).

6. Procédé selon la revendication 1, caractérisé en ce qu'on polymérise (a) un monomère styrénique en présence du catalyseur comprenant les composants (A) et (B) pour former effectivement un polymère, et ensuite on ajoute audit polymère (b) au moins un monomère choisi dans le groupe comprenant un monomère indénique, un monomère acénaphtylénique et un monomère contenant un groupe polaire pour successivement copolymériser ledit polymère et ledit monomère.
